# EUROPÄISCHE PATENTANMELDUNG

(11) **EP 3 838 905 A1**
(43) Veröffentlichungstag der Anmeldung: **23.06.2021**
(21) Anmeldenummer: 19217272.4
(22) Anmeldetag: 18.12.2019
(51) Int. Cl.: C07F 7/20, B01D 3/00, B01D 53/78

(54) **VERFAHREN ZUR HERSTELLUNG VON POLYSULFANSILANEN MITTELS PHASENTRANSFERKATALYSE**

(71) Anmelder: Evonik Operations GmbH, 45128 Essen (DE); Evonik Antwerpen NV, 2040 Antwerpen (BE)
(72) Erfinder: HERMEKE, Julia, 70839 Gerlingen (DE); DRÖGE, Helmut, 53332 Bornheim (DE); LYAGIN, Evgenij, 63456 Hanau (DE); MERTSCH, Horst, 79618 Rheinfelden (DE); BAUER, Elisabeth, 79692 Kleines Wiesental (DE); SMANS, Gert, 2640 Mortsel (BE)
(74) Vertreter: Evonik Patent Association

(57) **Zusammenfassung**

Verfahren zur Herstellung von Polysulfansilanen mittels Phasentransferkatalyse Gegenstand der Erfindung ist ein Verfahren zur Herstellung von Polysulfansilanen der Formel I

(R¹)₃₋ₘR²ₘSi-R³-Sₓ-R³-SiR²ₘ(OR¹)₃₋ₘ I

durch Umsetzung mindestens eines Silans der Formel II

(R¹)₃₋ₘR²ₘSi-R³-Hal II

mit M(SH)_{y} und/oder M_{z}S und Schwefel,
in Gegenwart eines Phasentransferkatalysators der Formel 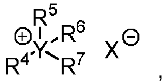 wobei man mindestens eine Trägerdampf-Destillation und / oder OzonBehandlung während oder nach der Umsetzung durchführt.

## Beschreibung

Gegenstand der Erfindung ist ein Verfahren zur Herstellung von Polysulfansilanen mittels Phasentransferkatalyse.

Aus US 5.405.985, US 5.583.245 und US 5.663.396 ist die Herstellung von Verbindungen der Formel Z-Alk-Sₙ-Alk-Z mittels Phasentransferkatalyse bekannt.

Ferner ist aus US 5.468.893 die Herstellung von Polysulfansilanen mit Phasentransferkatalyse in Gegenwart eines Alkalihalogenids oder Alkalisulfats bekannt.

Aus US 6.384.255 und US 6.448.426 ist die Änderung der Zugabenreihenfolge bei der Phasentransferkatalyse bekannt.

Bei der US 6.384.256 wird in einer Vorreaktion M₂Sₙ oder MSH mit Schwefel in Gegenwart von MOH umgesetzt.

Ferner ist aus US 6.740.767 und US 6.534.668 die Zugabe von Puffer bei der Phasentransferkatalyse bekannt.

Aus Handbook of Phase Transfer Catalysis (ISBN 978-0-7514-0258-2), Kapitel 3, Seite 123-127 ist die Zersetzung von quaternärem Ammonium-Phasentransferkatalysators, beispielsweise *tert-*Butylammoniumbromid zu Tributylamin, bekannt.

Nachteil der bekannten PTC Verfahren zur Herstellung von Polysulfansilanen sind die teilweise giftigen oder gesundheitsschädlichen Abbauprodukte des Katalysators im Endprodukt.

Gegenstand der Erfindung ist Verfahren zur Herstellung von Polysulfansilanen der Formel I

(R¹)₃₋ₘR²ₘSi-R³-Sₓ-R³-SiR²ₘ(R¹)₃₋ₘ I

wobei R¹ gleich oder verschieden sind und C1-C10-Alkoxygruppe, Phenoxygruppe oder Alkylpolyethergruppe -(R'-O)ᵣR" mit R' gleich oder verschieden sind und eine verzweigte oder unverzweigte , gesättigte oder ungesättigte, aliphatische, aromatische oder gemischt aliphatische/aromatische zweibindige C1-C30 Kohlenwasserstoffgruppe sind, r eine ganze Zahl von 1 bis 30 und R" unsubstituierte oder substituierte, verzweigte oder unverzweigte einbindige Alkyl-, Alkenyl-, Aryl- oder Aralkylgruppe sind,
R² gleich oder verschieden sind und C6-C20-Arylgruppe, C1-C10-Alkylgruppe, C2-C20-Alkenylgruppe, C7-C20-Aralkylgruppe oder Halogen sind,
R³ gleich oder verschieden sind und eine verzweigte oder unverzweigte, gesättigte oder ungesättigte, aliphatische, aromatische oder gemischt aliphatische/aromatische zweibindige C1-C30-Kohlenwasserstoffgruppe sind,
und m gleich oder verschieden sind und 0, 1, 2 oder 3 sind, x ist 2-10, vorzugsweise 2-4,
durch Umsetzung mindestens eines Silans der Formel II

(R¹)₃₋ₘR²ₘSi-R³-Hal II

wobei Hal gleich Cl, Br oder I, vorzugsweise Cl, ist,
mit M(SH)_{y}, vorzugsweise NaSH, und/oder M_{z}S, vorzugsweise Na₂S, und/oder M_{g}Sₕ und/oder Schwefel,
wobei y = 1 oder 2 ist und für y=1 M = Na oder K ist und für y=2 M = Ca oder Mg ist, und z = 1 oder 2 ist und für z=1 M = Ca oder Mg ist und für z=2 M = Na oder K ist, und g = 1 oder 2 ist und für g=1 M = Ca oder Mg ist und für g=2 M = Na oder K ist, h= natürlich Zahl zwischen 1 und 10,
in Gegenwart einer Base, einer wässrigen Phase und eines Phasentransferkatalysators der Formel III 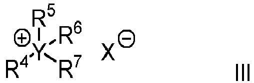
wobei Y ein Element der 5. Hauptgruppe, vorzugsweise N, P oder As, besonders bevorzugt N oder P, ganz besonders bevorzugt N, ist,
R⁴, R⁵, R⁶ und R⁷ identisch oder unterschiedlich sind und -(CH₂)ₖCH₃ Alkylreste, mit k=0-9, oder ein oder zwei Ringschlüsse -(CH₂)ₙ- , mit n=2-5, vorzugsweise n=4, zwischen zwei Substituenten ausgewählt aus den Gruppen R⁴, R⁵, R⁶ und R⁷ vorliegen und X⁻ gleich F⁻, I⁻, Cl⁻, Br⁻, ClO₄⁻, PF₆⁻, BF₄⁻, (C₆H₅)₄B⁻, H₂PO₄⁻, CH₃SO₃⁻, C₆H₅SO₃⁻, HSO₄⁻, NO₃⁻ oder ½ SO₄²⁻ ist,
welches dadurch gekennzeichnet ist, dass man mindestens eine Trägerdampf-Destillation und / oder Ozon-Behandlung während oder nach der Umsetzung durchführt.

Bevorzugt kann R¹ Ethoxy, m=0 und R³ = (CH₂)₃ sein.

Bevorzugt kann Hal = Cl sein.

Das Polysulfansilan der Formel I kann vorzugsweise sein:
[(CH₃O)₃Si(CH₂)₃]₂S, [(CH₃O)₃Si(CH₂)₃]₂S₂, [(CH₃O)₃Si(CH₂)₃]₂S₃, [(CH₃O)₃Si(CH₂)₃]₂S₄, [(CH₃O)₃Si(CH₂)₃]₂S₅, [(CH₃O)₃Si(CH₂)₃]₂S₆, [(CH₃O)₃Si(CH₂)₃]₂S₇, [(CH₃O)₃Si(CH₂)₃]₂S₈, [(CH₃O)₃Si(CH₂)₃]₂S₉, [(CH₃O)₃Si(CH₂)₃]₂S₁₀, [(CH₃O)₃Si(CH₂)₃]₂S₁₁, [(CH₃O)₃Si(CH₂)₃]₂S₁₂,
[(CH₃CH₂O)₃Si(CH₂)₃]₂S, [(CH₃CH₂O)₃Si(CH₂)₃]₂S₂, [(CH₃CH₂O)₃Si(CH₂)₃]₂S₃, [(CH₃CH₂O)₃Si(CH₂)₃]₂S₄, [(CH₃CH₂O)₃Si(CH₂)₃]₂S₅, [(CH₃CH₂O)₃Si(CH₂)₃]₂S₆, [(CH₃CH₂O)₃Si(CH₂)₃]₂S₇, [(CH₃CH₂O)₃Si(CH₂)₃]₂S₈, [(CH₃CH₂O)₃Si(CH₂)₃]₂S₉, [(CH₃CH₂O)₃Si(CH₂)₃]₂S₁₀, [(CH₃CH₂O)₃Si(CH₂)₃]₂S₁₁, [(CH₃CH₂O)₃Si(CH₂)₃]₂S₁₂,
[(C₃H₇O)₃Si(CH₂)₃]₂S, [(C₃H₇O)₃Si(CH₂)₃]₂S₂, [(C₃H₇O)₃Si(CH₂)₃]₂S₃, [(C₃H₇O)₃Si(CH₂)₃]₂S₄, [(C₃H₇O)₃Si(CH₂)₃]₂S₅, [(C₃H₇O)₃Si(CH₂)₃]₂S₆, [(C₃H₇O)₃Si(CH₂)₃]₂S₇, [(C₃H₇O)₃Si(CH₂)₃]₂S₈, [(C₃H₇O)₃Si(CH₂)₃]₂S₉, [(C₃H₇O)₃Si(CH₂)₃]₂S₁₀, [(C₃H₇O)₃Si(CH₂)₃]₂S₁₁, [(C₃H₇O)₃Si(CH₂)₃]₂S₁₂. Vorzugsweise kann als Silan der Formel II
   3-Chlorbutyl(triethoxysilan), 3-Chlorbutyl(trimethoxysilan), 3-Chlorbutyl(diethoxymethoxysilan), 3-Chlorpropyl(triethoxysilan), 3-Chlorpropyl(trimethoxysilan), 3-Chlorpropyl(diethoxymethoxysilan), 2-Chlorethyl(triethoxysilan), 2-Chlorethyl(trimethoxysilan), 2-Chlorethyl(diethoxymethoxysilan), 1-Chlormethyl(triethoxysilan), 1-Chlormethyl(trimethoxysilan), 1-Chlormethyldiethoxymethoxysilan), 3-Chlorpropyl(diethoxymethylsilan), 3-Chlorpropyl(dimethoxymethylsilan), 2-Chlorethyl(diethoxymethylsilan), 2-Chlorethyl(dimethoxymethylsilan), 1-Chlormethyl(diethoxymethylsilan), 1-Chlormethyl(dimethoxymethylsilan), 3-Chlorpropyl(ethoxydimethylsilan), 3-Chlorpropyl(methoxydimethylsilan), 2-Chlorethyl(ethoxydimethylsilan), 2-Chlorethyl(methoxydimethylsilan), 1-Chlormethyl(ethoxydimethylsilan), 1-Chlormethyl(methoxydimethylsilan),
[(C₉H₁₉O-(CH₂-CH₂O)₂](CH₃O)₂Si(CH₂)₃Cl, [(C₉H₁₉O-(CH₂-CH₂O)₃](CH₃O)₂Si(CH₂)₃Cl, [(C₉H₁₉O-(CH₂-CH₂O)₄](CH₃O)₂Si(CH₂)₃Cl, [(C₉H₁₉O-(CH₂-CH₂O)₅](CH₃O)₂Si(CH₂)₃Cl, [(C₉H₁₉O-(CH₂-CH₂O)₆](CH₃O)₂Si(CH₂)₃Cl, [(C₁₂H₂₅O-(CH₂-CH₂O)₂](CH₃O)₂Si(CH₂)₃Cl, [(C₁₂H₂₅O-(CH₂-CH₂O)₃](CH₃O)₂Si(CH₂)₃Cl, [(C₁₂H₂₅O-(CH₂-CH₂O)₄](CH₃O)₂Si(CH₂)₃Cl, [(C₁₂H₂₅O-(CH₂-CH₂O)₅](CH₃O)₂Si(CH₂)₃Cl, [(C₁₂H₂₅O-(CH₂-CH₂O)₆](CH₃O)₂Si(CH₂)₃Cl, [(C₁₃H₂₇O-(CH₂-CH₂O)₂](CH₃O)₂Si(CH₂)₃Cl, [(C₁₃H₂₇O-(CH₂-CH₂O)₃](CH₃O)₂Si(CH₂)₃Cl, [(C₁₃H₂₇O-(CH₂-CH₂O)₄](CH₃O)₂Si(CH₂)₃Cl, [(C₁₃H₂₇O-(CH₂-CH₂O)₅](CH₃O)₂Si(CH₂)₃Cl, [(C₁₃H₂₇O-(CH₂-CH₂O)₆](CH₃O)₂Si(CH₂)₃Cl, [(C₁₄H₂₉O-(CH₂-CH₂O)₂](CH₃O)₂Si(CH₂)₃Cl, [(C₁₄H₂₉O-(CH₂-CH₂O)₃](CH₃O)₂Si(CH₂)₃Cl, [(C₁₄H₂₉O-(CH₂-CH₂O)₄](CH₃O)₂Si(CH₂)₃Cl, [(C₁₄H₂₉O-(CH₂-CH₂O)₅](CH₃O)₂Si(CH₂)₃Cl, [(C₁₄H₂₉O-(CH₂-CH₂O)₆](CH₃O)₂Si(CH₂)₃Cl, [(C₉H₁₉O-(CH₂-CH₂O)₂]₂(CH₃O)Si(CH₂)₃Cl, [(C₉H₁₉O-(CH₂-CH₂O)₃]₂(CH₃O)Si(CH₂)₃Cl, [(C₉H₁₉O-(CH₂-CH₂O)₄]₂(CH₃O)Si(CH₂)₃Cl, [(C₉H₁₉O-(CH₂-CH₂O)₅]₂(CH₃O)Si(CH₂)₃Cl, [(C₉H₁₉O-(CH₂-CH₂O)₆]₂(CH₃O)Si(CH₂)₃Cl, [(C₁₂H₂₅O-(CH₂-CH₂O)₂]₂(CH₃O)Si(CH₂)₃Cl, [(C₁₂H₂₅O-(CH₂-CH₂O)₃]₂(CH₃O)Si(CH₂)₃Cl, [(C₁₂H₂₅O-(CH₂-CH₂O)₄]₂(CH₃O)Si(CH₂)₃Cl, [(C₁₂H₂₅O-(CH₂-CH₂O)₅]₂(CH₃O)Si(CH₂)₃Cl, [(C₁₂H₂₅O-(CH₂-CH₂O)₆]₂(CH₃O)Si(CH₂)₃Cl, [(C₁₃H₂₇O-(CH₂-CH₂O)₂]₂(CH₃O)Si(CH₂)₃Cl, [(C₁₃H₂₇O-(CH₂-CH₂O)₃]₂(CH₃O)Si(CH₂)₃Cl, [(C₁₃H₂₇O-(CH₂-CH₂O)₄]₂(CH₃O)Si(CH₂)₃Cl, [(C₁₃H₂₇O-(CH₂-CH₂O)₅]₂(CH₃O)Si(CH₂)₃Cl, [(C₁₃H₂₇O-(CH₂-CH₂O)₆]₂(CH₃O)Si(CH₂)₃Cl, [(C₁₄H₂₉O-(CH₂-CH₂O)₂]₂(CH₃O)Si(CH₂)₃Cl, [(C₁₄H₂₉O-(CH₂-CH₂O)₃]₂(CH₃O)Si(CH₂)₃Cl, [(C₁₄H₂₉O-(CH₂-CH₂O)₄]₂(CH₃O)Si(CH₂)₃Cl, [(C₁₄H₂₉O-(CH₂-CH₂O)₅]₂(CH₃O)Si(CH₂)₃Cl, [(C₁₄H₂₉O-(CH₂-CH₂O)₆]₂(CH₃O)Si(CH₂)₃Cl, [(C₉H₁₉O-(CH₂-CH₂O)₂](CH₃CH₂O)₂Si(CH₂)₃Cl, [(C₉H₁₉O-(CH₂-CH₂O)₃](CH₃CH₂O)₂Si(CH₂)₃Cl, [(C₉H₁₉O-(CH₂-CH₂O)₄](CH₃CH₂O)₂Si(CH₂)₃Cl, [(C₉H₁₉O-(CH₂-CH₂O)₅](CH₃CH₂O)₂Si(CH₂)₃Cl, [(C₉H₁₉O-(CH₂-CH₂O)₆](CH₃CH₂O)₂Si(CH₂)₃Cl, [(C₁₂H₂₅O-(CH₂-CH₂O)₂](CH₃CH₂O)₂Si(CH₂)₃Cl, [(C₁₂H₂₅O-(CH₂-CH₂O)₃](CH₃CH₂O)₂Si(CH₂)₃Cl, [(C₁₂H₂₅O-(CH₂-CH₂O)₄](CH₃CH₂O)₂Si(CH₂)₃Cl, [(C₁₂H₂₅O-(CH₂-CH₂O)₅](CH₃CH₂O)₂Si(CH₂)₃Cl, [(C₁₂H₂₅O-(CH₂-CH₂O)₆](CH₃CH₂O)₂Si(CH₂)₃Cl, [(C₁₃H₂₇O-(CH₂-CH₂O)₂](CH₃CH₂O)₂Si(CH₂)₃Cl, [(C₁₃H₂₇O-(CH₂-CH₂O)₃](CH₃CH₂O)₂Si(CH₂)₃Cl, [(C₁₃H₂₇O-(CH₂-CH₂O)₄](CH₃CH₂O)₂Si(CH₂)₃Cl, [(C₁₃H₂₇O-(CH₂-CH₂O)₅](CH₃CH₂O)₂Si(CH₂)₃Cl, [(C₁₃H₂₇O-(CH₂-CH₂O)₆](CH₃CH₂O)₂Si(CH₂)₃Cl, [(C₁₄H₂₉O-(CH₂-CH₂O)₂](CH₃CH₂O)₂Si(CH₂)₃Cl, [(C₁₄H₂₉O-(CH₂-CH₂O)₃](CH₃CH₂O)₂Si(CH₂)₃Cl, [(C₁₄H₂₉O-(CH₂-CH₂O)₄](CH₃CH₂O)₂Si(CH₂)₃Cl, [(C₁₄H₂₉O-(CH₂-CH₂O)₅](CH₃CH₂O)₂Si(CH₂)₃Cl, [(C₁₄H₂₉O-(CH₂-CH₂O)₆](CH₃CH₂O)₂Si(CH₂)₃Cl, [(C₉H₁₉O-(CH₂-CH₂O)₂]₂(CH₃CH₂O)Si(CH₂)₃Cl, [(C₉H₁₉O-(CH₂-CH₂O)₃]₂(CH₃CH₂O)Si(CH₂)₃Cl, [(C₉H₁₉O-(CH₂-CH₂O)₄]₂(CH₃CH₂O)Si(CH₂)₃Cl, [(C₉H₁₉O-(CH₂-CH₂O)₅]₂(CH₃CH₂O)Si(CH₂)₃Cl, [(C₉H₁₉O-(CH₂-CH₂O)₆]₂(CH₃CH₂O)Si(CH₂)₃Cl, [(C₁₂H₂₅O-(CH₂-CH₂O)₂]₂(CH₃CH₂O)Si(CH₂)₃Cl, [(C₁₂H₂₅O-(CH₂-CH₂O)₃]₂(CH₃CH₂O)Si(CH₂)₃Cl, [(C₁₂H₂₅O-(CH₂-CH₂O)₄]₂(CH₃CH₂O)Si(CH₂)₃Cl, [(C₁₂H₂₅O-(CH₂-CH₂O)₅]₂(CH₃CH₂O)Si(CH₂)₃Cl, [(C₁₂H₂₅O-(CH₂-CH₂O)₆]₂(CH₃CH₂O)Si(CH₂)₃Cl, [(C₁₃H₂₇O-(CH₂-CH₂O)₂]₂(CH₃CH₂O)Si(CH₂)₃Cl, [(C₁₃H₂₇O-(CH₂-CH₂O)₃]₂(CH₃CH₂O)Si(CH₂)₃Cl, [(C₁₃H₂₇O-(CH₂-CH₂O)₄]₂(CH₃CH₂O)Si(CH₂)₃Cl, [(C₁₃H₂7O-(CH₂-CH₂O)₅]₂(CH₃CH₂O)Si(CH₂)₃Cl, [(C₁₃H₂₇O-(CH₂-CH₂O)₆]₂(CH₃CH₂O)Si(CH₂)₃Cl, [(C₁₄H₂₉O-(CH₂-CH₂O)₂]₂(CH₃CH₂O)Si(CH₂)₃Cl, [(C₁₄H₂₉O-(CH₂-CH₂O)₃]₂(CH₃CH₂O)Si(CH₂)₃Cl, [(C₁₄H₂₉O-(CH₂-CH₂O)₄]₂(CH₃CH₂O)Si(CH₂)₃Cl, [(C₁₄H₂₉O-(CH₂-CH₂O)₅]₂(CH₃CH₂O)Si(CH₂)₃Cl, [(C₁₄H₂₉O-(CH₂-CH₂O)₆]₂(CH₃CH₂O)Si(CH₂)₃Cl, [(C₉H₁₉O-(CH₂-CH₂O)₂]₃Si(CH₂)₃Cl, [(C₉H₁₉O-(CH₂-CH₂O)₃]₃Si(CH₂)₃Cl, [(C₉H₁₉O-(CH₂-CH₂O)₄]₃Si(CH₂)₃Cl, [(C₉H₁₉O-(CH₂-CH₂O)₅]₃Si(CH₂)₃Cl, [(C₉H₁₉O-(CH₂-CH₂O)₆]₃Si(CH₂)₃Cl, [(C₁₂H₂₅O-(CH₂-CH₂O)₂]₃Si(CH₂)₃Cl, [(C₁₂H₂₅O-(CH₂-CH₂O)₃]₃Si(CH₂)₃Cl, [(C₁₂H₂₅O-(CH₂-CH₂O)₄]₃Si(CH₂)₃Cl, [(C₁₂H₂₅O-(CH₂-CH₂O)₅]₃Si(CH₂)₃Cl, [(C₁₂H₂₅O-(CH₂-CH₂O)₆]₃Si(CH₂)₃Cl, [(C₁₃H₂₇O-(CH₂-CH₂O)₂]₃Si(CH₂)₃Cl, [(C₁₃H₂₇O-(CH₂-CH₂O)₃]₃Si(CH₂)₃Cl, [(C₁₃H₂₇O-(CH₂-CH₂O)₄]₃Si(CH₂)₃Cl, [(C₁₃H₂₇O-(CH₂-CH₂O)₅]₃Si(CH₂)₃Cl, [(C₁₃H₂₇O-(CH₂-CH₂O)₆]₃Si(CH₂)₃Cl, [(C₁₄H₂₉O-(CH₂-CH₂O)₂]₃Si(CH₂)₃Cl, [(C₁₄H₂₉O-(CH₂-CH₂O)₃]₃Si(CH₂)₃Cl, [(C₁₄H₂₉O-(CH₂-CH₂O)₄]₃Si(CH₂)₃Cl, [(C₁₄H₂₉O-(CH₂-CH₂O)₅]₃Si(CH₂)₃Cl oder [(C₁₄H₂₉O-(CH₂-CH₂O)₆]₃Si(CH₂)₃Cl
   eingesetzt werden.

Phasentransferkatalysator der Formel III können sein:
[N(CH₃)₄]X, [N(C₂H₅)₄]X, [N(C₃H₇)₄]X, [N(C₄H₉)₄]X, [N(C₅H₁₁)₄]X, [N(C₆H₁₃)₄]X, [N(C₇H₁₅)₄]X, [N(C₈H₁₇)₄]X, [N(C₉H₁₉)₄]X, [N(C₁₀H₂₁)₄]X, [N(C₂H₅)(CH₃)₃]X, [N(C₂H₅)₂(CH₃)₂]X, [N(C₂H₅)₃(CH₃)]X, [N(C₃H₇)(CH₃)₃]X, [N(C₃H₇)₂(CH₃)₂]X, [N(C₃H₇)₃(CH₃)]X, [N(C₄H₉)(CH₃)₃]X, [N(C₄H₉)₂(CH₃)₂]X, [N(C₄H₉)₃(CH₃)]X,
[N(C₅H₁₁)(CH₃)₃]X, [N(C₅H₁₁)₂(CH₃)₂]X, [N(C₅H₁₁)₃(CH₃)]X, [N(C₆H₁₃)(CH₃)₃]X, [N(C₆H₁₃)₂(CH₃)₂]X, [N(C₆H₁₃)₃(CH₃)]X, [N(C₇H₁₅)(CH₃)₃]X, [N(C₇H₁₅)₂(CH₃)₂]X, [N(C₇H₁₅)₃(CH₃)]X, [N(C₈H₁₇)(CH₃)₃]X, [N(C₈H₁₇)₂(CH₃)₂]X, [N(C₈H₁₇)₃(CH₃)]X, [N(C₉H₁₉)(CH₃)₃]X, [N(C₉H₁₉)₂(CH₃)₂]X, [N(C₉H₁₉)₃(CH₃)]X, [N(C₁₀H₂₁)(CH₃)₃]X, [N(C₁₀H₂₁)₂(CH₃)₂]X, [N(C₁₀H₂₁)₃(CH₃)]X,
[N(C₃H₇)(C₂H₅)₃]X, [N(C₃H₇)₂(C₂H₅)₂]X, [N(C₃H₇)₃(C₂H₅)]X, [N(C₄H₉)(C₂H₅)₃]X, [N(C₄H₉)₂(C₂H₅)₂]X, [N(C₄H₉)₃(C₂H₅)]X, [N(C₅H₁₁)(C₂H₅)₃]X, [N(C₅H₁₁)₂(C₂H₅)₂]X, [N(C₅H₁₁)₃(C₂H₅)]X, [N(C₆H₁₃)(C₂H₅)₃]X, [N(C₆H₁₃)₂(C₂H₅)₂]X, [N(C₆H₁₃)₃(C₂H₅)]X, [N(C₇H₁₅)(C₂H₅)₃]X, [N(C₇H₁₅)₂(C₂H₅)₂]X, [N(C₇H₁₅)₃(C₂H₅)]X, [N(C₈H₁₇)(C₂H₅)₃]X, [N(C₈H₁₇)₂(C₂H₅)₂]X, [N(C₈H₁₇)₃(C₂H₅)]X, [N(C₉H₁₉)(C₂H₅)₃]X, [N(C₉H₁₉)₂(C₂H₅)₂]X, [N(C₉H₁₉)₃(C₂H₅)]X, [N(C₁₀H₂₁)(C₂H₅)₃]X, [N(C₁₀H₂₁)₂(C₂H₅)₂]X, [N(C₁₀H₂₁)₃(C₂H₅)]X,
[N(C₄H₉)(C₃H₇)₃]X, [N(C₄H₉)₂(C₃H₇)₂]X, [N(C₄H₉)₃(C₃H₇)]X, [N(C₅H₁₁)(C₃H₇)₃]X, [N(C₅H₁₁)₂(C₃H₇)₂]X, [N(C₅H₁₁)₃(C₃H₇)]X, [N(C₆H₁₃)(C₃H₇)₃]X, [N(C₆H₁₃)₂(C₃H₇)₂]X, [N(C₆H₁₃)₃(C₃H₇)]X, [N(C₇H₁₅)(C₃H₇)₃]X, [N(C₇H₁₅)₂(C₃H7)₂]X, [N(C₇H₁₅)₃(C₃H₇)]X, [N(C₈H₁₇)(C₃H₇)₃]X, [N(C₈H₁₇)₂(C₃H₇)₂]X, [N(C₈H₁₇)₃(C₃H₇)]X, [N(C₉H₁₉)(C₃H₇)₃]X, [N(C₉H₁₉)₂(C₃H₇)₂]X, [N(C₉H₁₉)₃(C₃H₇)]X, [N(C₁₀H₂₁)(C₃H₇)₃]X, [N(C₁₀H₂₁)₂(C₃H₇)₂]X, [N(C₁₀H₂₁)₃(C₃H₇)]X,
[N(C₅H₁₁)(C₄H₉)₃]X, [N(C₅H₁₁)₂(C₄H₉)₂]X, [N(C₅H₁₁)₃(C₄H₉)]X, [N(C₆H₁₃)(C₄H₉)₃]X, [N(C₆H₁₃)₂(C₄H₉)₂]X, [N(C₆H₁₃)₃(C₄H₉)]X, [N(C₇H₁₅)(C₄H₉)₃]X, [N(C₇H₁₅)₂(C₄H₉)₂]X, [N(C₇H₁₅)₃(C₄H₉)]X, [N(C₈H₁₇)(C₄H₉)₃]X, [N(C₈H₁₇)₂(C₄H₉)₂]X, [N(C₈H₁₇)₃(C₄H₉)]X, [N(C₉H₁₉)(C₄H₉)₃]X, [N(C₉H₁₉)₂(C₄H₉)₂]X, [N(C₉H₁₉)₃(C₄H₉)]X, [N(C₁₀H₂₁)(C₄H₉)₃]X, [N(C₁₀H₂₁)₂(C₄H₉)₂]X, [N(C₁₀H₂₁)₃(C₄H₉)]X,
[N(C₆H₁₃)(C₅H₁₁)₃]X, [N(C₆H₁₃)₂(C₅H₁₁)₂]X, [N(C₆H₁₃)₃(C₅H₁₁)]X, [N(C₇H₁₅)(C₅H₁₁)₃]X, [N(C₇H₁₅)₂(C₅H₁₁)₂]X, [N(C₇H₁₅)₃(C₅H₁₁)]X,
[N(C₈H₁₇)(C₅H₁₁)₃]X, [N(C₈H₁₇)₂(C₅H₁₁)₂]X, [N(C₈H₁₇)₃(C₅H₁₁)]X, [N(C₉H₁₉)(C₅H₁₁)₃]X, [N(C₉H₁₉)₂(C₅H₁₁)₂]X, [N(C₉H₁₉)₃(C₅H₁₁)]X, [N(C₁₀H₂₁)(C₅H₁₁)₃]X, [N(C₁₀H₂₁)₂(C₅H₁₁)₂]X, [N(C₁₀H₂₁)₃(C₅H₁₁)]X,
[N(C₇H₁₅)(C₆H₁₃)₃]X, [N(C₇H₁₅)₂(C₆H₁₃)₂]X, [N(C₇H₁₅)₃(C₆H₁₃)]X, [N(C₈H₁₇)(C₆H₁₃)₃]X, [N(C₈H₁₇)₂(C₆H₁₃)₂]X, [N(C₈H₁₇)₃(C₆H₁₃)]X, [N(C₉H₁₉)(C₆H₁₃)₃]X, [N(C₉H₁₉)₂(C₆H₁₃)₂]X, [N(C₉H₁₉)₃(C₆H₁₃)]X, [N(C₁₀H₂₁)(C₆H₁₃)₃]X, [N(C₁₀H₂₁)₂(C₆H₁₃)₂]X, [N(C₁₀H₂₁)₃(C₆H₁₃)]X,
[N(C₈H₁₇)(C₇H₁₅)₃]X, [N(C₈H₁₇)₂(C₇H₁₅)₂]X, [N(C₈H₁₇)₃(C₇H₁₅)]X, [N(C₉H₁₉)(C₇H₁₅)₃]X, [N(C₉H₁₉)₂(C₇H₁₅)₂]X, [N(C₉H₁₉)₃(C₇H₁₅)]X, [N(C₁₀H₂₁)(C₇H₁₅)₃]X, [N(C₁₀H₂₁)₂(C₇H₁₅)₂]X, [N(C₁₀H₂₁)₃(C₇H₁₅)]X, [N(C₉H₁₉)(C₈H₁₇)₃]X, [N(C₉H₁₉)₂(C₈H₁₇)₂]X, [N(C₉H₁₉)₃(C₈H₁₇)]X, [N(C₁₀H₂₁)(C₈H₁₇)₃]X, [N(C₁₀H₂₁)₂(C₈H₁₇)₂]X, [N(C₁₀H₂₁)₃(C₈H₁₇)]X, [N(C₁₀H₂₁)(C₉H₁₉)₃]X, [N(C₁₀H₂₁)₂(C₉H₁₉)₂]X, [N(C₁₀H₂₁)₃(C₉H₁₉)]X,
[N(CH₃)(C₁₀H₂₁)(C₂H₅)₂]X, [N(CH₃)(C₁₀H₂₁)₂(C₂H₅)]X, [N(CH₃)(C₁₀H₂₁)(C₃H₇)₂]X, [N(CH₃)(C₁₀H₂₁)₂(C₃H₇)]X, [N(CH₃)(C₁₀H₂₁)(C₄H₉)₂]X, [N(CH₃)(C₁₀H₂₁)₂(C₄H₉)]X, [N(CH₃)(C₁₀H₂₁)(C₅H₁₁)₂]X, [N(CH₃)(C₁₀H₂₁)₂(C₅H₁₁)]X,
[N(CH₃)(C₁₀H₂₁)(C₆H₁₃)₂]X, [N(CH₃)(C₁₀H₂₁)₂(C₆H₁₃)]X, [N(CH₃)(C₁₀H₂₁)(C₇H₁₅)₂]X, [N(CH₃)(C₁₀H₂₁)₂(C₇H₁₅)]X, [N(CH₃)(C₁₀H₂₁)(C₈H₁₇)₂]X, [N(CH₃)(C₁₀H₂₁)₂(C₈H₁₇)]X, [N(CH₃)(C₁₀H₂₁)(C₉H₁₉)₂]X, [N(CH₃)(C₁₀H₂₁)₂(C₉H₁₉)]X,
[N(CH₃)(C₉H₁₉)(C₂H₅)₂]X, [N(CH₃)(C₉H₁₉)₂(C₂H₅)]X, [N(CH₃)(C₉H₁₉)(C₃H₇)₂]X, [N(CH₃)(C₉H₁₉)₂(C₃H₇)]X, [N(CH₃)(C₉H₁₉)(C₄H₉)₂]X, [N(CH₃)(C₉H₁₉)₂(C₄H₉)]X, [N(CH₃)(C₉H₁₉)(C₅H₁₁)₂]X, [N(CH₃)(C₉H₁₉)₂(C₅H₁₁)]X, [N(CH₃)(C₉H₁₉)(C₆H₁₃)₂]X, [N(CH₃)(C₉H₁₉)₂(C₆H₁₃)]X, [N(CH₃)(C₉H₁₉)(C₇H₁₅)₂]X, [N(CH₃)(C₉H₁₉)₂(C₇H₁₅)]X, [N(CH₃)(C₉H₁₉)(C₈H₁₇)₂]X, [N(CH₃)(C₉H₁₉)₂(C₈H₁₇)]X,
[N(CH₃)(C₈H₁₇)(C₂H₅)₂]X, [N(CH₃)(C₈H₁₇)₂(C₂H₅)]X, [N(CH₃)(C₈H₁₇)(C₃H₇)₂]X, [N(CH₃)(C₈H₁₇)₂(C₃H₇)]X, [N(CH₃)(C₈H₁₇)(C₄H₉)₂]X, [N(CH₃)(C₈H₁₇)₂(C₄H₉)]X, [N(CH₃)(C₈H₁₇)(C₅H₁₁)₂]X, [N(CH₃)(C₈H₁₇)₂(C₅H₁₁)]X, [N(CH₃)(C₈H₁₇)(C₆H₁₃)₂]X, [N(CH₃)(C₈H₁₇)₂(C₆H₁₃)]X, [N(CH₃)(C₈H₁₇)(C₇H₁₅)₂]X, [N(CH₃)(C₈H₁₇)₂(C₇H₁₅)]X,
[N(CH₃)(C₇H₁₅)(C₂H₅)₂]X, [N(CH₃)(C₇H₁₅)₂(C₂H₅)]X, [N(CH₃)(C₇H₁₅)(C₃H₇)₂]X, [N(CH₃)(C₇H₁₅)₂(C₃H₇)]X, [N(CH₃)(C₇H₁₅)(C₄H₉)₂]X, [N(CH₃)(C₇H₁₅)₂(C₄H₉)]X, [N(CH₃)(C₇H₁₅)(C₅H₁₁)₂]X, [N(CH₃)(C₇H₁₅)₂(C₅H₁₁)]X, [N(CH₃)(C₇H₁₅)(C₆H₁₃)₂]X, [N(CH₃)(C₇H₁₅)₂(C₆H₁₃)]X,
[N(CH₃)(C₆H₁₃)(C₂H₅)₂]X, [N(CH₃)(C₆H₁₃)₂(C₂H₅)]X, [N(CH₃)(C₆H₁₃)(C₃H₇)₂]X, [N(CH₃)(C₆H₁₃)₂(C₃H₇)]X, [N(CH₃)(C₆H₁₃)(C₄H₉)₂]X, [N(CH₃)(C₆H₁₃)₂(C₄H₉)]X, [N(CH₃)(C₆H₁₃)(C₅H₁₁)₂]X, [N(CH₃)(C₆H₁₃)₂(C₅H₁₁)]X,
[N(CH₃)(C₅H₁₁)(C₂H₅)₂]X, [N(CH₃)(C₅H₁₁)₂(C₂H₅)]X, [N(CH₃)(C₅H₁₁)(C₃H₇)₂]X, [N(CH₃)(C₅H₁₁)₂(C₃H₇)]X, [N(CH₃)(C₅H₁₁)(C₄H₉)₂]X, [N(CH₃)(C₅H₁₁)₂(C₄H₉)]X,
[N(CH₃)(C₄H₉)(C₂H₅)₂]X, [N(CH₃)(C₄H₉)₂(C₂H₅)]X, [N(CH₃)(C₄H₉)(C₃H₇)₂]X, [N(CH₃)(C₄H₉)₂(C₃H₇)]X,
[N(CH₃)(C₃H₇)(C₂H₅)₂]X, [N(CH₃)(C₃H₇)₂(C₂H₅)]X,
[N(C₂H₅)(C₁₀H₂₁)(C₃H₇)₂]X, [N(C₂H₅)(C₁₀H₂₁)₂(C₃H₇)]X, [N(C₂H₅)(C₁₀H₂₁)(C₄H₉)₂]X, [N(C₂H₅)(C₁₀H₂₁)₂(C₄H₉)]X, [N(C₂H₅)(C₁₀H₂₁)(C₅H₁₁)₂]X, [N(C₂H₅)(C₁₀H₂₁)₂(C₅H₁₁)]X, [N(C₂H₅)(C₁₀H₂₁)(C₆H₁₃)₂]X, [N(C₂H₅)(C₁₀H₂₁)₂(C₆H₁₃)]X, [N(C₂H₅)(C₁₀H₂₁)(C₇H₁₅)₂]X, [N(C₂H₅)(C₁₀H₂₁)₂(C₇H₁₅)]X, [N(C₂H₅)(C₁₀H₂₁)(C₈H₁₇)₂]X, [N(C₂H₅)(C₁₀H₂₁)₂(C₈H₁₇)]X, [N(C₂H₅)(C₁₀H₂₁)(C₉H₁₉)₂]X, [N(C₂H₅)(C₁₀H₂₁)₂(C₉H₁₉)]X,
[N(C₂H₅)(C₉H₁₉)(C₃H₇)₂]X, [N(C₂H₅)(C₉H₁₉)₂(C₃H₇)]X, [N(C₂H₅)(C₉H₁₉)(C₄H₉)₂]X, [N(C₂H₅)(C₉H₁₉)₂(C₄H₉)]X, [N(C₂H₅)(C₉H₁₉)(C₅H₁₁)₂]X, [N(C₂H₅)(C₉H₁₉)₂(C₅H₁₁)]X, [N(C₂H₅)(C₉H₁₉)(C₆H₁₃)₂]X, [N(C₂H₅)(C₉H₁₉)₂(C₆H₁₃)]X, [N(C₂H₅)(C₉H₁₉)(C₇H₁₅)₂]X, [N(C₂H₅)(C₉H₁₉)₂(C₇H₁₅)]X, [N(C₂H₅)(C₉H₁₉)(C₈H₁₇)₂]X, [N(C₂H₅)(C₉H₁₉)₂(C₈H₁₇)]X,
[N(C₂H₅)(C₈H₁₇)(C₃H₇)₂]X, [N(C₂H₅)(C₈H₁₇)₂(C₃H₇)]X, [N(C₂H₅)(C₈H₁₇)(C₄H₉)₂]X, [N(C₂H₅)(C₈H₁₇)₂(C₄H₉)]X, [N(C₂H₅)(C₈H₁₇)(C₅H₁₁)₂]X, [N(C₂H₅)(C₈H₁₇)₂(C₅H₁₁)]X,
[N(C₂H₅)(C₈H₁₇)(C₆H₁₃)₂]X, [N(C₂H₅)(C₈H₁₇)₂(C₆H₁₃)]X, [N(C₂H₅)(C₈H₁₇)(C₇H₁₅)₂]X, [N(C₂H₅)(C₈H₁₇)₂(C₇H₁₅)]X,
[N(C₂H₅)(C₇H₁₅)(C₃H₇)₂]X, [N(C₂H₅)(C₇H₁₅)₂(C₃H₇)]X, [N(C₂H₅)(C₇H₁₅)(C₄H₉)₂]X, [N(C₂H₅)(C₇H₁₅)₂(C₄H₉)]X,
[N(C₂H₅)(C₇H₁₅)(C₅H₁₁)₂]X, [N(C₂H₅)(C₇H₁₅)₂(C₅H₁₁)]X, [N(C₂H₅)(C₇H₁₅)(C₆H₁₃)₂]X, [N(C₂H₅)(C₇H₁₅)₂(C₆H₁₃)]X,
[N(C₂H₅)(C₆H₁₃)(C₃H₇)₂]X, [N(C₂H₅)(C₆H₁₃)₂(C₃H₇)]X, [N(C₂H₅)(C₆H₁₃)(C₄H₉)₂]X, [N(C₂H₅)(C₆H₁₃)₂(C₄H₉)]X, [N(C₂H₅)(C₆H₁₃)(C₅H₁₁)₂]X, [N(C₂H₅)(C₆H₁₃)₂(C₅H₁₁)]X,
[N(C₂H₅)(C₅H₁₁)(C₃H₇)₂]X, [N(C₂H₅)(C₅H₁₁)₂(C₃H₇)]X, [N(C₂H₅)(C₅H₁₁)(C₄H₉)₂]X, [N(C₂H₅)(C₅H₁₁)₂(C₄H₉)]X,
[N(C₂H₅)(C₄H₉)(C₃H₇)₂]X, [N(C₂H₅)(C₄H₉)₂(C₃H₇)]X, [N(C₃H₇)(C₁₀H₂₁)(C₄H₉)₂]X, [N(C₃H₇)(C₁₀H₂₁)₂(C₄H₉)]X, [N(C₃H₇)(C₁₀H₂₁)(C₅H₁₁)₂]X, [N(C₃H₇)(C₁₀H₂₁)₂(C₅H₁₁)]X, [N(C₃H₇)(C₁₀H₂₁)(C₆H₁₃)₂]X, [N(C₃H₇)(C₁₀H₂₁)₂(C₆H₁₃)]X, [N(C₃H₇)(C₁₀H₂₁)(C₇H₁₅)₂]X, [N(C₃H₇)(C₁₀H₂₁)₂(C₇H₁₅)]X, [N(C₃H₇)(C₁₀H₂₁)(C₈H₁₇)₂]X, [N(C₃H₇)(C₁₀H₂₁)₂(C₈H₁₇)]X, [N(C₃H₇)(C₁₀H₂₁)(C₉H₁₉)₂]X, [N(C₃H₇)(C₁₀H₂₁)₂(C₉H₁₉)]X,
[N(C₃H₇)(C₉H₁₉)(C₄H₉)₂]X, [N(C₃H₇)(C₉H₁₉)₂(C₄H₉)]X, [N(C₃H₇)(C₉H₁₉)(C₅H₁₁)₂]X, [N(C₃H₇)(C₉H₁₉)₂(C₅H₁₁)]X, [N(C₃H₇)(C₉H₁₉)(C₆H₁₃)₂]X, [N(C₃H₇)(C₉H₁₉)₂(C₆H₁₃)]X,
[N(C₃H₇)(C₉H₁₉)(C₇H₁₅)₂]X, [N(C₃H₇)(C₉H₁₉)₂(C₇H₁₅)]X, [N(C₃H₇)(C₉H₁₉)(C₈H₁₇)₂]X, [N(C₃H₇)(C₉H₁₉)₂(C₈H₁₇)]X,
[N(C₃H₇)(C₈H₁₇)(C₄H₉)₂]X, [N(C₃H₇)(C₈H₁₇)₂(C₄H₉)]X, [N(C₃H₇)(C₈H₁₇)(C₅H₁₁)₂]X, [N(C₃H₇)(C₈H₁₇)₂(C₅H₁₁)]X, [N(C₃H₇)(C₈H₁₇)(C₆H₁₃)₂]X, [N(C₃H₇)(C₈H₁₇)₂(C₆H₁₃)]X, [N(C₃H₇)(C₈H₁₇)(C₇H₁₅)₂]X, [N(C₃H₇)(C₈H₁₇)₂(C₇H₁₅)]X,
[N(C₃H₇)(C₇H₁₅)(C₄H₉)₂]X, [N(C₃H₇)(C₇H₁₅)₂(C₄H₉)]X, [N(C₃H₇)(C₇H₁₅)(C₅H₁₁)₂]X, [N(C₃H₇)(C₇H₁₅)₂(C₅H₁₁)]X, [N(C₃H₇)(C₇H₁₅)(C₆H₁₃)₂]X, [N(C₃H₇)(C₇H₁₅)₂(C₆H₁₃)]X,
[N(C₃H₇)(C₆H₁₃)(C₄H₉)₂]X, [N(C₃H₇)(C₆H₁₃)₂(C₄H₉)]X, [N(C₃H₇)(C₆H₁₃)(C₅H₁₁)₂]X, [N(C₃H₇)(C₆H₁₃)₂(C₅H₁₁)]X,
[N(C₃H₇)(C₅H₁₁)(C₄H₉)₂]X, [N(C₃H₇)(C₅H₁₁)₂(C₄H₉)]X,
[N(C₄H₉)(C₁₀H₂₁)(C₅H₁₁)₂]X, [N(C₄H₉)(C₁₀H₂₁)₂(C₅H₁₁)]X, [N(C₄H₉)(C₁₀H₂₁)(C₆H₁₃)₂]X, [N(C₄H₉)(C₁₀H₂₁)₂(C₆H₁₃)]X, [N(C₄H₉)(C₁₀H₂₁)(C₇H₁₅)₂]X, [N(C₄H₉)(C₁₀H₂₁)₂(C₇H₁₅)]X, [N(C₄H₉)(C₁₀H₂₁)(C₈H₁₇)₂]X, [N(C₄H₉)(C₁₀H₂₁)₂(C₈H₁₇)]X, [N(C₄H₉)(C₁₀H₂₁)(C₉H₁₉)₂]X, [N(C₄H₉)(C₁₀H₂₁)₂(C₉H₁₉)]X,
[N(C₄H₉)(C₉H₁₉)(C₅H₁₁)₂]X, [N(C₄H₉)(C₉H₁₉)₂(C₅H₁₁)]X, [N(C₄H₉)(C₉H₁₉)(C₆H₁₃)₂]X, [N(C₄H₉)(C₉H₁₉)₂(C₆H₁₃)]X, [N(C₄H₉)(C₉H₁₉)(C₇H₁₅)₂]X, [N(C₄H₉)(C₉H₁₉)₂(C₇H₁₅)]X, [N(C₄H₉)(C₉H₁₉)(C₈H₁₇)₂]X, [N(C₄H₉)(C₉H₁₉)₂(C₈H₁₇)]X,
[N(C₄H₉)(C₈H₁₇)(C₅H₁₁)₂]X, [N(C₄H₉)(C₈H₁₇)₂(C₅H₁₁)]X, [N(C₄H₉)(C₈H₁₇)(C₆H₁₃)₂]X, [N(C₄H₉)(C₈H₁₇)₂(C₆H₁₃)]X, [N(C₄H₉)(C₈H₁₇)(C₇H₁₅)₂]X, [N(C₄H₉)(C₈H₁₇)₂(C₇H₁₅)]X,
[N(C₄H₉)(C₇H₁₅)(C₅H₁₁)₂]X, [N(C₄H₉)(C₇H₁₅)₂(C₅H₁₁)]X, [N(C₄H₉)(C₇H₁₅)(C₆H₁₃)₂]X, [N(C₄H₉)(C₇H₁₅)₂(C₆H₁₃)]X, [N(C₄H₉)(C₆H₁₃)(C₅H₁₁)₂]X, [N(C₄H₉)(C₆H₁₃)₂(C₅H₁₁)]X,
[N(C₅H₁₁)(C₁₀H₂₁)(C₆H₁₃)₂]X, [N(C₅H₁₁)(C₁₀H₂₁)₂(C₆H₁₃)]X, [N(C₅H₁₁)(C₁₀H₂₁)(C₇H₁₅)₂]X, [N(C₅H₁₁)(C₁₀H₂₁)₂(C₇H₁₅)]X,
[N(C₅H₁₁)(C₁₀H₂₁)(C₈H₁₇)₂]X, [N(C₅H₁₁)(C₁₀H₂₁)₂(C₈H₁₇)]X, [N(C₅H₁₁)(C₁₀H₂₁)(C₉H₁₉)₂]X, [N(C₅H₁₁)(C₁₀H₂₁)₂(C₉H₁₉)]X,
[N(C₅H₁₁)(C₉H₁₉)(C₆H₁₃)₂]X, [N(C₅H₁₁)(C₉H₁₉)₂(C₆H₁₃)]X, [N(C₅H₁₁)(C₉H₁₉)(C₇H₁₅)₂]X, [N(C₅H₁₁)(C₉H₁₉)₂(C₇H₁₅)]X, [N(C₅H₁₁)(C₉H₁₉)(C₈H₁₇)₂]X, [N(C₅H₁₁)(C₉H₁₉)₂(C₈H₁₇)]X,
[N(C₅H₁₁)(C₈H₁₇)(C₆H₁₃)₂]X, [N(C₅H₁₁)(C₈H₁₇)₂(C₆H₁₃)]X, [N(C₅H₁₁)(C₈H₁₇)(C₇H₁₅)₂]X, [N(C₅H₁₁)(C₈H₁₇)₂(C₇H₁₅)]X,
[N(C₅H₁₁)(C₇H₁₅)(C₆H₁₃)₂]X, [N(C₅H₁₁)(C₇H₁₅)₂(C₆H₁₃)]X,
[N(C₆H₁₃)(C₁₀H₂₁)(C₇H₁₅)₂]X, [N(C₆H₁₃)(C₁₀H₂₁)₂(C₇H₁₅)]X, [N(C₆H₁₃)(C₁₀H₂₁)(C₈H₁₇)₂]X, [N(C₆H₁₃)(C₁₀H₂₁)₂(C₈H₁₇)]X, [N(C₆H₁₃)(C₁₀H₂₁)(C₉H₁₉)₂]X, [N(C₆H₁₃)(C₁₀H₂₁)₂(C₉H₁₉)]X,
[N(C₆H₁₃)(C₉H₁₉)(C₇H₁₅)₂]X, [N(C₆H₁₃)(C₉H₁₉)₂(C₇H₁₅)]X, [N(C₆H₁₃)(C₉H₁₉)(C₈H₁₇)₂]X, [N(C₆H₁₃)(C₉H₁₉)₂(C₈H₁₇)]X,
[N(C₆H₁₃)(C₈H₁₇)(C₇H₁₅)₂]X, [N(C₆H₁₃)(C₈H₁₇)₂(C₇H₁₅)]X,
[N(C₇H₁₅)(C₁₀H₂₁)(C₈H₁₇)₂]X, [N(C₇H₁₅)(C₁₀H₂₁)₂(C₈H₁₇)]X, [N(C₇H₁₅)(C₁₀H₂₁)(C₉H₁₉)₂]X, [N(C₇H₁₅)(C₁₀H₂₁)₂(C₉H₁₉)]X, [N(C₇H₁₅)(C₉H₁₉)(C₈H₁₇)₂]X, [N(C₇H₁₅)(C₉H₁₉)₂(C₈H₁₇)]X,
[N(C₈H₁₇)(C₁₀H₂₁)(C₉H₁₉)₂]X, [N(C₈H₁₇)(C₁₀H₂₁)₂(C₉H₁₉)]X,
[P(CH₃)₄]X, [P(C₂H₅)₄]X, [P(C₃H₇)₄]X, [P(C₄H₉)₄]X, [P(C₅H₁₁)₄]X, [P(C₆H₁₃)₄]X, [P(C₇H₁₅)₄]X, [P(C₈H₁₇)₄]X, [P(C₉H₁₉)₄]X, [P(C₁₀H₂₁)₄]X, [P(C₂H₅)(CH₃)₃]X, [P(C₂H₅)₂(CH₃)₂]X, [P(C₂H₅)₃(CH₃)]X, [P(C₃H₇)(CH₃)₃]X, [P(C₃H₇)₂(CH₃)₂]X, [P(C₃H₇)₃(CH₃)]X, [P(C₄H₉)(CH₃)₃]X, [P(C₄H₉)₂(CH₃)₂]X, [P(C₄H₉)₃(CH₃)]X, [P(C₅H₁₁)(CH₃)₃]X, [P(C₅H₁₁)₂(CH₃)₂]X, [P(C₅H₁₁)₃(CH₃)]X, [P(C₆H₁₃)(CH₃)₃]X, [P(C₆H₁₃)₂(CH₃)₂]X, [P(C₆H₁₃)₃(CH₃)]X, [P(C₇H₁₅)(CH₃)₃]X, [P(C₇H₁₅)₂(CH₃)₂]X, [P(C₇H₁₅)₃(CH₃)]X, [P(C₈H₁₇)(CH₃)₃]X, [P(C₈H₁₇)₂(CH₃)₂]X, [P(C₈H₁₇)₃(CH₃)]X, [P(C₉H₁₉)(CH₃)₃]X, [P(C₉H₁₉)₂(CH₃)₂]X, [P(C₉H₁₉)₃(CH₃)]X, [P(C₁₀H₂₁)(CH₃)₃]X, [P(C₁₀H₂₁)₂(CH₃)₂]X, [P(C₁₀H₂₁)₃(CH₃)]X,
[P(C₃H₇)(C₂H₅)₃]X, [P(C₃H₇)₂(C₂H₅)₂]X, [P(C₃H₇)₃(C₂H₅)]X, [P(C₄H₉)(C₂H₅)₃]X, [P(C₄H₉)₂(C₂H₅)₂]X, [P(C₄H₉)₃(C₂H₅)]X, [P(C₅H₁₁)(C₂H₅)₃]X, [P(C₅H₁₁)₂(C₂H₅)₂]X, [P(C₅H₁₁)₃(C₂H₅)]X,
[P(C₆H₁₃)(C₂H₅)₃]X, [P(C₆H₁₃)₂(C₂H₅)₂]X, [P(C₆H₁₃)₃(C₂H₅)]X, [P(C₇H₁₅)(C₂H₅)₃]X, [P(C₇H₁₅)₂(C₂H₅)₂]X, [P(C₇H₁₅)₃(C₂H₅)]X, [P(C₈H₁₇)(C₂H₅)₃]X, [P(C₈H₁₇)₂(C₂H₅)₂]X, [P(C₈H₁₇)₃(C₂H₅)]X, [P(C₉H₁₉)(C₂H₅)₃]X, [P(C₉H₁₉)₂(C₂H₅)₂]X, [P(C₉H₁₉)₃(C₂H₅)]X, [P(C₁₀H₂₁)(C₂H₅)₃]X, [P(C₁₀H₂₁)₂(C₂H₅)₂]X, [P(C₁₀H₂₁)₃(C₂H₅)]X,
[P(C₄H₉)(C₃H₇)₃]X, [P(C₄H₉)₂(C₃H₇)₂]X, [P(C₄H₉)₃(C₃H₇)]X, [P(C₅H₁₁)(C₃H₇)₃]X, [P(C₅H₁₁)₂(C₃H₇)₂]X, [P(C₅H₁₁)₃(C₃H₇)]X, [P(C₆H₁₃)(C₃H₇)₃]X, [P(C₆H₁₃)₂(C₃H₇)₂]X, [P(C₆H₁₃)₃(C₃H₇)]X, [P(C₇H₁₅)(C₃H₇)₃]X, [P(C₇H₁₅)₂(C₃H₇)₂]X, [P(C₇H₁₅)₃(C₃H₇)]X, [P(C₈H₁₇)(C₃H₇)₃]X, [P(C₈H₁₇)₂(C₃H₇)₂]X, [P(C₈H₁₇)₃(C₃H₇)]X, [P(C₉H₁₉)(C₃H₇)₃]X, [P(C₉H₁₉)₂(C₃H₇)₂]X, [P(C₉H₁₉)₃(C₃H₇)]X, [P(C₁₀H₂₁)(C₃H₇)₃]X, [P(C₁₀H₂₁)₂(C₃H₇)₂]X, [P(C₁₀H₂₁)₃(C₃H₇)]X,
[P(C₅H₁₁)(C₄H₉)₃]X, [P(C₅H₁₁)₂(C₄H₉)₂]X, [P(C₅H₁₁)₃(C₄H₉)]X, [P(C₆H₁₃)(C₄H₉)₃]X, [P(C₆H₁₃)₂(C₄H₉)₂]X, [P(C₆H₁₃)₃(C₄H₉)]X, [P(C₇H₁₅)(C₄H₉)₃]X, [P(C₇H₁₅)₂(C₄H₉)₂]X, [P(C₇H₁₅)₃(C₄H₉)]X, [P(C₈H₁₇)(C₄H₉)₃]X, [P(C₈H₁₇)₂(C₄H₉)₂]X, [P(C₈H₁₇)₃(C₄H₉)]X, [P(C₉H₁₉)(C₄H₉)₃]X, [P(C₉H₁₉)₂(C₄H₉)₂]X, [P(C₉H₁₉)₃(C₄H₉)]X, [P(C₁₀H₂₁)(C₄H₉)₃]X, [P(C₁₀H₂₁)₂(C₄H₉)₂]X, [P(C₁₀H₂₁)₃(C₄H₉)]X,
[P(C₆H₁₃)(C₅H₁₁)₃]X, [P(C₆H₁₃)₂(C₅H₁₁)₂]X, [P(C₆H₁₃)₃(C₅H₁₁)1]X, [P(C₇H₁₅)(C₅H₁₁)₃]X, [P(C₇H₁₅)₂(C₅H₁₁)₂]X, [P(C₇H₁₅)₃(C₅H₁₁)]X, [P(C₈H₁₇)(C₅H₁₁)₃]X, [P(C₈H₁₇)₂(C₅H₁₁)₂]X, [P(C₈H₁₇)₃(C₅H₁₁)]X, [P(C₉H₁₉)(C₅H₁₁)₃]X, [P(C₉H₁₉)₂(C₅H₁₁)₂]X, [P(C₉H₁₉)₃(C₅H₁₁)]X, [P(C₁₀H₂₁)(C₅H₁₁)₃]X, [P(C₁₀H₂₁)₂(C₅H₁₁)₂]X, [P(C₁₀H₂₁)₃(C₅H₁₁)]X,
[P(C₇H₁₅)(C₆H₁₃)₃]X, [P(C₇H₁₅)₂(C₆H₁₃)₂]X, [P(C₇H₁₅)₃(C₆H₁₃)]X,
[P(C₈H₁₇)(C₆H₁₃)₃]X, [P(C₈H₁₇)₂(C₆H₁₃)₂]X, [P(C₈H₁₇)₃(C₆H₁₃)]X, [P(C₉H₁₉)(C₆H₁₃)₃]X, [P(C₉H₁₉)₂(C₆H₁₃)₂]X, [P(C₉H₁₉)₃(C₆H₁₃)]X, [P(C₁₀H₂₁)(C₆H₁₃)₃]X, [P(C₁₀H₂₁)₂(C₆H₁₃)₂]X, [P(C₁₀H₂₁)₃(C₆H₁₃)]X,
[P(C₈H₁₇)(C₇H₁₅)₃]X, [P(C₈H₁₇)₂(C₇H₁₅)₂]X, [P(C₈H₁₇)₃(C₇H₁₅)]X, [P(C₉H₁₉)(C₇H₁₅)₃]X, [P(C₉H₁₉)₂(C₇H₁₅)₂]X, [P(C₉H₁₉)₃(C₇H₁₅)]X, [P(C₁₀H₂₁)(C₇H₁₅)₃]X, [P(C₁₀H₂₁)₂(C₇H₁₅)₂]X, [P(C₁₀H₂₁)₃(C₇H₁₅)]X,
[P(C₉H₁₉)(C₈H₁₇)₃]X, [P(C₉H₁₉)₂(C₈H₁₇)₂]X, [P(C₉H₁₉)₃(C₈H₁₇)]X, [P(C₁₀H₂₁)(C₈H₁₇)₃]X, [P(C₁₀H₂₁)₂(C₈H₁₇)₂]X, [P(C₁₀H₂₁)₃(C₈H₁₇)]X,
[P(C₁₀H₂₁)(C₉H₁₉)₃]X, [P(C₁₀H₂₁)₂(C₉H₁₉)₂]X, [P(C₁₀H₂₁)₃(C₉H₁₉)]X,
[P(CH₃)(C₁₀H₂₁)(C₂H₅)₂]X, [P(CH₃)(C₁₀H₂₁)₂(C₂H₅)]X, [P(CH₃)(C₁₀H₂₁)(C₃H₇)₂]X, [P(CH₃)(C₁₀H₂₁)₂(C₃H₇)]X, [P(CH₃)(C₁₀H₂₁)(C₄H₉)₂]X, [P(CH₃)(C₁₀H₂₁)₂(C₄H₉)]X,
[P(CH₃)(C₁₀H₂₁)(C₅H₁₁)₂]X, [P(CH₃)(C₁₀H₂₁)₂(C₅H₁₁)]X, [P(CH₃)(C₁₀H₂₁)(C₆H₁₃)₂]X, [P(CH₃)(C₁₀H₂₁)₂(C₆H₁₃)]X, [P(CH₃)(C₁₀H₂₁)(C₇H₁₅)₂]X, [P(CH₃)(C₁₀H₂₁)₂(C₇H₁₅)]X, [P(CH₃)(C₁₀H₂₁)(C₈H₁₇)₂]X, [P(CH₃)(C₁₀H₂₁)₂(C₈H₁₇)]X, [P(CH₃)(C₁₀H₂₁)(C₉H₁₉)₂]X, [P(CH₃)(C₁₀H₂₁)₂(C₉H₁₉)]X, [P(CH₃)(C₉H₁₉)(C₂H₅)₂]X, [P(CH₃)(C₉H₁₉)₂(C₂H₅)]X, [P(CH₃)(C₉H₁₉)(C₃H₇)₂]X, [P(CH₃)(C₉H₁₉)₂(C₃H₇)]X, [P(CH₃)(C₉H₁₉)(C₄H₉)₂]X, [P(CH₃)(C₉H₁₉)₂(C₄H₉)]X, [P(CH₃)(C₉H₁₉)(C₅H₁₁)₂]X, [P(CH₃)(C₉H₁₉)₂(C₅H₁₁)]X, [P(CH₃)(C₉H₁₉)(C₆H₁₃)₂]X, [P(CH₃)(C₉H₁₉)₂(C₆H₁₃)]X,
[P(CH₃)(C₉H₁₉)(C₇H₁₅)₂]X, [P(CH₃)(C₉H₁₉)₂(C₇H₁₅)]X, [P(CH₃)(C₉H₁₉)(C₈H₁₇)₂]X, [P(CH₃)(C₉H₁₉)₂(C₈H₁₇)]X,
[P(CH₃)(C₈H₁₇)(C₂H₅)₂]X, [P(CH₃)(C₈H₁₇)₂(C₂H₅)]X, [P(CH₃)(C₈H₁₇)(C₃H₇)₂]X, [P(CH₃)(C₈H₁₇)₂(C₃H₇)]X, [P(CH₃)(C₈H₁₇)(C₄H₉)₂]X, [P(CH₃)(C₈H₁₇)₂(C₄H₉)]X, [P(CH₃)(C₈H₁₇)(C₅H₁₁)₂]X, [P(CH₃)(C₈H₁₇)₂(C₅H₁₁)]X, [P(CH₃)(C₈H₁₇)(C₆H₁₃)₂]X, [P(CH₃)(C₈H₁₇)₂(C₆H₁₃)]X, [P(CH₃)(C₈H₁₇)(C₇H₁₅)₂]X, [P(CH₃)(C₈H₁₇)₂(C₇H₁₅)]X,
[P(CH₃)(C₇H₁₅)(C₂H₅)₂]X, [P(CH₃)(C7H₁₅)₂(C₂H₅)]X, [P(CH₃)(C₇H₁₅)(C₃H₇)₂]X, [P(CH₃)(C₇H₁₅)₂(C₃H₇)]X, [P(CH₃)(C₇H₁₅)(C₄H₉)₂]X, [P(CH3)(C7H₁₅)₂(C₄H₉)]X, [P(CH₃)(C₇H₁₅)(C₅H₁₁)₂]X, [P(CH₃)(C₇H₁₅)₂(C₅H₁₁)]X, [P(CH₃)(C₇H₁₅)(C₆H₁₃)₂]X, [P(CH₃)(C₇H₁₅)₂(C₆H₁₃)]X,
[P(CH₃)(C₆H₁₃)(C₂H₅)₂]X, [P(CH₃)(C₆H₁₃)₂(C₂H₅)]X, [P(CH₃)(C₆H₁₃)(C₃H₇)₂]X, [P(CH₃)(C₆H₁₃)₂(C₃H₇)]X, [P(CH₃)(C₆H₁₃)(C₄H₉)₂]X, [P(CH₃)(C₆H₁₃)₂(C₄H₉)]X, [P(CH₃)(C₆H₁₃)(C₅H₁₁)₂]X, [P(CH₃)(C₆H₁₃)₂(C₅H₁₁)]X,
[P(CH₃)(C₅H₁₁)(C₂H₅)₂]X, [P(CH₃)(C₅H₁₁)₂(C₂H₅)]X, [P(CH₃)(C₅H₁₁)(C₃H₇)₂]X, [P(CH₃)(C₅H₁₁)₂(C₃H₇)]X, [P(CH₃)(C₅H₁₁)(C₄H₉)₂]X, [P(CH₃)(C₅H₁₁)₂(C₄H₉)]X,
[P(CH₃)(C₄H₉)(C₂H₅)₂]X, [P(CH₃)(C₄H₉)₂(C₂H₅)]X, [P(CH₃)(C₄H₉)(C₃H₇)₂]X, [P(CH₃)(C₄H₉)₂(C₃H₇)]X,
[P(CH₃)(C₃H₇)(C₂H₅)₂]X, [P(CH₃)(C₃H7)₂(C₂H₅)]X,
[P(C₂H₅)(C₁₀H₂₁)(C₃H₇)₂]X, [P(C₂H₅)(C₁₀H₂₁)₂(C₃H₇)]X, [P(C₂H₅)(C₁₀H₂₁)(C₄H₉)₂]X, [P(C₂H₅)(C₁₀H₂₁)₂(C₄H₉)]X, [P(C₂H₅)(C₁₀H₂₁)(C₅H₁₁)₂]X, [P(C₂H₅)(C₁₀H₂₁)₂(C₅H₁₁)]X,
[P(C₂H₅)(C₁₀H₂₁)(C₆H₁₃)₂]X, [P(C₂H₅)(C₁₀H₂₁)₂(C₆H₁₃)]X, [P(C₂H₅)(C₁₀H₂₁)(C₇H₁₅)₂]X, [P(C₂H₅)(C₁₀H₂₁)₂(C₇H₁₅)]X, [P(C₂H₅)(C₁₀H₂₁)(C₈H₁₇)₂]X, [P(C₂H₅)(C₁₀H₂₁)₂(C₈H₁₇)]X, [P(C₂H₅)(C₁₀H₂₁)(C₉H₁₉)₂]X, [P(C₂H₅)(C₁₀H₂₁)₂(C₉H₁₉)]X,
[P(C₂H₅)(C₉H₁₉)(C₃H₇)₂]X, [P(C₂H₅)(C₉H₁₉)₂(C₃H₇)]X, [P(C₂H₅)(C₉H₁₉)(C₄H₉)₂]X, [P(C₂H₅)(C₉H₁₉)₂(C₄H₉)]X, [P(C₂H₅)(C₉H₁₉)(C₅H₁₁)₂]X, [P(C₂H₅)(C₉H₁₉)₂(C₅H₁₁)]X, [P(C₂H₅)(C₉H₁₉)(C₆H₁₃)₂]X, [P(C₂H₅)(C₉H₁₉)₂(C₆H₁₃)]X, [P(C₂H₅)(C₉H₁₉)(C₇H₁₅)₂]X, [P(C₂H₅)(C₉H₁₉)₂(C₇H₁₅)]X, [P(C₂H₅)(C₉H₁₉)(C₈H₁₇)₂]X, [P(C₂H₅)(C₉H₁₉)₂(C₈H₁₇)]X,
[P(C₂H₅)(C₈H₁₇)(C₃H₇)₂]X, [P(C₂H₅)(C₈H₁₇)₂(C₃H₇)]X, [P(C₂H₅)(C₈H₁₇)(C₄H₉)₂]X, [P(C₂H₅)(C₈H₁₇)₂(C₄H₉)]X, [P(C₂H₅)(C₈H₁₇)(C₅H₁₁)₂]X, [P(C₂H₅)(C₈H₁₇)₂(C₅H₁₁)]X, [P(C₂H₅)(C₈H₁₇)(C₆H₁₃)₂]X, [P(C₂H₅)(C₈H₁₇)₂(C₆H₁₃)]X, [P(C₂H₅)(C₈H₁₇)(C₇H₁₅)₂]X, [P(C₂H₅)(C₈H₁₇)₂(C₇H₁₅)]X,
[P(C₂H₅)(C₇H₁₅)(C₃H₇)₂]X, [P(C₂H₅)(C₇H₁₅)₂(C₃H₇)]X, [P(C₂H₅)(C₇H₁₅)(C₄H₉)₂]X, [P(C₂H₅)(C₇H₁₅)₂(C₄H₉)]X, [P(C₂H₅)(C₇H₁₅)(C₅H₁₁)₂]X, [P(C₂H₅)(C₇H₁₅)₂(C₅H₁₁)]X, [P(C₂H₅)(C₇H₁₅)(C₆H₁₃)₂]X, [P(C₂H₅)(C₇H₁₅)₂(C₆H₁₃)]X,
[P(C₂H₅)(C₆H₁₃)(C₃H₇)₂]X, [P(C₂H₅)(C₆H₁₃)₂(C₃H₇)]X, [P(C₂H₅)(C₆H₁₃)(C₄H₉)₂]X, [P(C₂H₅)(C₆H₁₃)₂(C₄H₉)]X, [P(C₂H₅)(C₆H₁₃)(C₅H₁₁)₂]X, [P(C₂H₅)(C₆H₁₃)₂(C₅H₁₁)]X,
[P(C₂H₅)(C₅H₁₁)(C₃H₇)₂]X, [P(C₂H₅)(C₅H₁₁)₂(C₃H₇)]X, [P(C₂H₅)(C₅H₁₁)(C₄H₉)₂]X, [P(C₂H₅)(C₅H₁₁)₂(C₄H₉)]X,
[P(C₂H₅)(C₄H₉)(C₃H₇)₂]X, [P(C₂H₅)(C₄H₉)₂(C₃H₇)]X,
[P(C₃H₇)(C₁₀H₂₁)(C₄H₉)₂]X, [P(C₃H₇)(C₁₀H₂₁)₂(C₄H₉)]X, [P(C₃H₇)(C₁₀H₂₁)(C₅H₁₁)₂]X, [P(C₃H₇)(C₁₀H₂₁)₂(C₅H₁₁)]X, [P(C₃H₇)(C₁₀H₂₁)(C₆H₁₃)₂]X, [P(C₃H₇)(C₁₀H₂₁)₂(C₆H₁₃)]X, [P(C₃H₇)(C₁₀H₂₁)(C₇H₁₅)₂]X, [P(C₃H₇)(C₁₀H₂₁)₂(C₇H₁₅)]X, [P(C₃H₇)(C₁₀H₂₁)(C₈H₁₇)₂]X, [P(C₃H₇)(C₁₀H₂₁)₂(C₈H₁₇)]X, [P(C₃H₇)(C₁₀H₂₁)(C₉H₁₉)₂]X, [P(C₃H₇)(C₁₀H₂₁)₂(C₉H₁₉)]X,
[P(C₃H₇)(C₉H₁₉)(C₄H₉)₂]X, [P(C₃H₇)(C₉H₁₉)₂(C₄H₉)]X, [P(C₃H₇)(C₉H₁₉)(C₅H₁₁)₂]X, [P(C₃H₇)(C₉H₁₉)₂(C₅H₁₁)]X, [P(C₃H₇)(C₉H₁₉)(C₆H₁₃)₂]X, [P(C₃H₇)(C₉H₁₉)₂(C₆H₁₃)]X, [P(C₃H₇)(C₉H₁₉)(C₇H₁₅)₂]X, [P(C₃H₇)(C₉H₁₉)₂(C₇H₁₅)]X, [P(C₃H₇)(C₉H₁₉)(C₈H₁₇)₂]X, [P(C₃H₇)(C₉H₁₉)₂(C₈H₁₇)]X,
[P(C₃H₇)(C₈H₁₇)(C₄H₉)₂]X, [P(C₃H₇)(C₈H₁₇)₂(C₄H₉)]X, [P(C₃H₇)(C₈H₁₇)(C₅H₁₁)₂]X, [P(C₃H₇)(C₈H₁₇)₂(C₅H₁₁)]X, [P(C₃H₇)(C₈H₁₇)(C₆H₁₃)₂]X, [P(C₃H₇)(C₈H₁₇)₂(C₆H₁₃)]X, [P(C₃H₇)(C₈H₁₇)(C₇H₁₅)₂]X, [P(C₃H₇)(C₈H₁₇)₂(C₇H₁₅)]X,
[P(C₃H₇)(C₇H₁₅)(C₄H₉)₂]X, [P(C₃H₇)(C₇H₁₅)₂(C₄H₉)]X, [P(C₃H₇)(C₇H₁₅)(C₅H₁₁)₂]X, [P(C₃H₇)(C₇H₁₅)₂(C₅H₁₁)]X, [P(C₃H₇)(C₇H₁₅)(C₆H₁₃)₂]X, [P(C₃H₇)(C₇H₁₅)₂(C₆H₁₃)]X,
[P(C₃H₇)(C₆H₁₃)(C₄H₉)₂]X, [P(C₃H₇)(C₆H₁₃)₂(C₄H₉)]X, [P(C₃H₇)(C₆H₁₃)(C₅H₁₁)₂]X, [P(C₃H₇)(C₆H₁₃)₂(C₅H₁₁)]X,
[P(C₃H₇)(C₅H₁₁)(C₄H₉)₂]X, [P(C₃H₇)(C₅H₁₁)₂(C₄H₉)]X,
[P(C₄H₉)(C₁₀H₂₁)(C₅H₁₁)₂]X, [P(C₄H₉)(C₁₀H₂₁)₂(C₅H₁₁)]X, [P(C₄H₉)(C₁₀H₂₁)(C₆H₁₃)₂]X, [P(C₄H₉)(C₁₀H₂₁)₂(C₆H₁₃)]X, [P(C₄H₉)(C₁₀H₂₁)(C₇H₁₅)₂]X, [P(C₄H₉)(C₁₀H₂₁)₂(C₇H₁₅)]X, [P(C₄H₉)(C₁₀H₂₁)(C₈H₁₇)₂]X, [P(C₄H₉)(C₁₀H₂₁)₂(C₈H₁₇)]X, [P(C₄H₉)(C₁₀H₂₁)(C₉H₁₉)₂]X, [P(C₄H₉)(C₁₀H₂₁)₂(C₉H₁₉)]X,
[P(C₄H₉)(C₉H₁₉)(C₅H₁₁)₂]X, [P(C₄H₉)(C₉H₁₉)₂(C₅H₁₁)]X, [P(C₄H₉)(C₉H₁₉)(C₆H₁₃)₂]X, [P(C₄H₉)(C₉H₁₉)₂(C₆H₁₃)]X, [P(C₄H₉)(C₉H₁₉)(C₇H₁₅)₂]X, [P(C₄H₉)(C₉H₁₉)₂(C₇H₁₅)]X, [P(C₄H₉)(C₉H₁₉)(C₈H₁₇)₂]X, [P(C₄H₉)(C₉H₁₉)₂(C₈H₁₇)]X,
[P(C₄H₉)(C₈H₁₇)(C₅H₁₁)₂]X, [P(C₄H₉)(C₈H₁₇)₂(C₅H₁₁)]X, [P(C₄H₉)(C₈H₁₇)(C₆H₁₃)₂]X, [P(C₄H₉)(C₈H₁₇)₂(C₆H₁₃)]X, [P(C₄H₉)(C₈H₁₇)(C₇H₁₅)₂]X, [P(C₄H₉)(C₈H₁₇)₂(C₇H₁₅)]X,
[P(C₄H₉)(C₇H₁₅)(C₅H₁₁)₂]X, [P(C₄H₉)(C₇H₁₅)₂(C₅H₁₁)]X, [P(C₄H₉)(C₇H₁₅)(C₆H₁₃)₂]X, [P(C₄H₉)(C₇H₁₅)₂(C₆H₁₃)]X,
[P(C₄H₉)(C₆H₁₃)(C₅H₁₁)₂]X, [P(C₄H₉)(C₆H₁₃)₂(C₅H₁₁)]X,
[P(C₅H₁₁)(C₁₀H₂₁)(C₆H₁₃)₂]X, [P(C₅H₁₁)(C₁₀H₂₁)₂(C₆H₁₃)]X, [P(C₅H₁₁)(C₁₀H₂₁)(C₇H₁₅)₂]X, [P(C₅H₁₁)(C₁₀H₂₁)₂(C₇H₁₅)]X, [P(C₅H₁₁)(C₁₀H₂₁)(C₈H₁₇)₂]X, [P(C₅H₁₁)(C₁₀H₂₁)₂(C₈H₁₇)]X, [P(C₅H₁₁)(C₁₀H₂₁)(C₉H₁₉)₂]X, [P(C₅H₁₁)(C₁₀H₂₁)₂(C₉H₁₉)]X,
[P(C₅H₁₁)(C₉H₁₉)(C₆H₁₃)₂]X, [P(C₅H₁₁)(C₉H₁₉)₂(C₆H₁₃)]X, [P(C₅H₁₁)(C₉H₁₉)(C₇H₁₅)₂]X, [P(C₅H₁₁)(C₉H₁₉)₂(C₇H₁₅)]X, [P(C₅H₁₁)(C₉H₁₉)(C₈H₁₇)₂]X, [P(C₅H₁₁)(C₉H₁₉)₂(C₈H₁₇)]X,
[P(C₅H₁₁)(C₈H₁₇)(C₆H₁₃)₂]X, [P(C₅H₁₁)(C₈H₁₇)₂(C₆H₁₃)]X, [P(C₅H₁₁)(C₈H₁₇)(C₇H₁₅)₂]X, [P(C₅H₁₁)(C₈H₁₇)₂(C₇H₁₅)]X,
[P(C₅H₁₁)(C₇H₁₅)(C₆H₁₃)₂]X, [P(C₅H₁₁)(C₇H₁₅)₂(C₆H₁₃)]X,
[P(C₆H₁₃)(C₁₀H₂₁)(C₇H₁₅)₂]X, [P(C₆H₁₃)(C₁₀H₂₁)₂(C₇H₁₅)]X, [P(C₆H₁₃)(C₁₀H₂₁)(C₈H₁₇)₂]X, [P(C₆H₁₃)(C₁₀H₂₁)₂(C₈H₁₇)]X, [P(C₆H₁₃)(C₁₀H₂₁)(C₉H₁₉)₂]X, [P(C₆H₁₃)(C₁₀H₂₁)₂(C₉H₁₉)]X, [P(C₆H₁₃)(C₉H₁₉)(C₇H₁₅)₂]X, [P(C₆H₁₃)(C₉H₁₉)₂(C₇H₁₅)]X, [P(C₆H₁₃)(C₉H₁₉)(C₈H₁₇)₂]X, [P(C₆H₁₃)(C₉H₁₉)₂(C₈H₁₇)]X,
[P(C₆H₁₃)(C₈H₁₇)(C₇H₁₅)₂]X, [P(C₆H₁₃)(C₈H₁₇)₂(C₇H₁₅)]X,
[P(C₇H₁₅)(C₁₀H₂₁)(C₈H₁₇)₂]X, [P(C₇H₁₅)(C₁₀H₂₁)₂(C₈H₁₇)]X, [P(C₇H₁₅)(C₁₀H₂₁)(C₉H₁₉)₂]X, [P(C₇H₁₅)(C₁₀H₂₁)₂(C₉H₁₉)]X,
[P(C₇H₁₅)(C₉H₁₉)(C₈H₁₇)₂]X, [P(C₇H₁₅)(C₉H₁₉)₂(C₈H₁₇)]X,
[P(C₈H₁₇)(C₁₀H₂₁)(C₉H₁₉)₂]X, [P(C₈H₁₇)(C₁₀H₂₁)₂(C₉H₁₉)]X.

Als Base kann M_{3-w}CO₃, M(OH)_{w}, M_{3-w}(HPO₄), M(H₂PO₄)_{w}, M₃(PO₄)_{w}, wobei w 1 oder 2 ist und für w=1 M = Na oder K und für w=2 M = Ca oder Mg ist, eingesetzt werden. Vorzugsweise kann als Base Na₂CO₃ oder NaOH eingesetzt werden.

Das erfindungsgemäße Verfahren zur Herstellung von Polysulfansilanen der Formel I kann man bei Temperaturen von 25°C bis 200°C, vorzugsweise 70°C bis 160°C, durchführen.

Bei dem erfindungsgemäßen Verfahren zur Herstellung von Polysulfansilanen der Formel I kann man den Phasentransferkatalysators der Formel III und anschließend das Silan der Formel II zu der wässrigen Phase, hergestellt durch M(SH)_{y}, vorzugsweise NaSH, und/oder M_{z}S, vorzugsweise Na₂S, und/oder M_{g}Sₕ, eine Base, vorzugsweise NaOH oder Na₂CO₃ und Schwefel in wässriger Lösung / Suspension, zugeben.

Bei dem erfindungsgemäßen Verfahren zur Herstellung von Polysulfansilanen der Formel I kann M(SH)_{y} und/oder M_{z}S und/oder M_{g}Sₕ aus MOH und Schwefel in-situ hergestellt werden.

Das molare Mengenverhältnis zwischen dem eingesetzten Silan der Formel II und dem eingesetzten NaSH kann zwischen 0,35 und 1,0, vorzugsweise zwischen 0,45 und 0,55, betragen.

Das molare Mengenverhältnis zwischen dem eingesetzten Silan der Formel II und der Base kann zwischen 0,35 und 1,0, vorzugsweise zwischen 0,45 und 0,60, betragen.

Das molare Mengenverhältnis zwischen dem eingesetzten Silan der Formel II und Schwefel kann zwischen 0,4 und 3,0, vorzugsweise zwischen 0,5 und 1,5, betragen.

Das molare Mengenverhältnis zwischen dem eingesetzten Silan der Formel II und dem Phasentransferkatalysator der Formel III kann zwischen 0,001 und 0,1, vorzugsweise zwischen 0,003 und 0,05, betragen.

Das erfindungsgemäße Verfahren zur Herstellung von Polysulfansilanen der Formel I kann ohne organisches Lösungsmittel durchgeführt werden. Die zur Verwendung kommende wässrige Phase kann Prozesssalze des Voransatzes enthalten. Während der Bereitung der wässrigen Phase kann die Menge des Phasentransferkatalysators der Formel III teilweise oder komplett zugegeben werden. Im Falle der teilweisen Zugabe des Phasentransferkatalysators der Formel III kann die Restmenge in Portionen oder kontinuierlich, vorzugsweise kontinuierlich, während der Dosierung des Silans der Formel II zugegeben werden. Das zur Herstellung von Polysulfansilanen der Formel I verwendete M(SH)_{y} und/oder M_{z}S und/oder M_{g}Sₕ kann vor oder während der Reaktion hergestellt werden.

Bei der Reaktion kann die wässrige Phase mit dem Silan der Formel II vermischt werden. Dabei können sowohl die wässrige Phase in das Silan der Formel II dosiert werden als auch das Silan der Formel II in die wässrige Phase dosiert werden. Vorzugsweise wird das Silan der Formel II in die wässrige Phase dosiert. Während der Reaktion kann das Silan der Formel II in Portionen oder kontinuierlich, vorzugsweise kontinuierlich, zugegeben werden.

Das erfindungsgemäße Verfahren kann in einem atmosphärisch offenen oder geschlossenen Reaktionsgefäß durchgeführt werden. Der Inhalt des Reaktionsgefäßes kann durchmischt werden. Zur Durchmischung des Inhaltes des Reaktionsgefäßes eignen sich externe Umwälzungen, Agitation des Inhaltes des Reaktionsgefäßes durch Gase oder Rührwerke, vorzugsweise Rührwerke. Das Verfahren kann kontinuierlich oder diskontinuierlich durchgeführt werden.

Eventuell verbliebene Teilmengen des Phasentransferkatalysators der Formel III können während der Reaktion in Portionen oder kontinuierlich, vorzugsweise kontinuierlich, zugegeben werden.

Nach der Reaktionsumsetzung kann die wässrige von der organischen Phase abgetrennt werden.

Die Trägerdampf-Erzeugung für die Trägerdampf-Destillation kann in-situ oder extern, vorzugsweise extern, erfolgen. Als Trägerstoff bei der Trägerdampf-Destillation kann Stickstoff, Wasserdampf, Alkohole oder eine Kombination der vorgenannten Stoffe verwendet werden.

Die Trägerdampf-Destillation kann eine einstufige Destillation, zum Beispiel Blase, oder mehrstufige Destillation, zum Beispiel mehrere Blasen oder Kolonne(n) mit Böden, Füllkörper oder gepackte Kolonne, vorzugsweise gepackte Kolonne, sein.

Die Trägerdampf-Destillation kann kontinuierlich oder diskontinuierlich, vorzugsweise kontinuierlich, durchgeführt werden.

Die Trägerdampf-Destillation kann unter Vakuum, vorzugsweise bei einem Druck kleiner 100 mbar abs., durchgeführt werden.

Das Reaktionsprodukt kann vor der Trägerdampf-Destillation durch Phasentrennung von der wässrigen Phase separiert werden. Das Reaktionsprodukt kann vor der Trägerdampf-Destillation durch Filtration von Feststoffen, beispielsweise NaCl, separiert werden.

Das Reaktionsprodukt kann vor der Trägerdampf-Destillation durch Destillation aufgereinigt werden.

Das Kopfprodukt der Trägerdampf-Destillation kann zur Rückgewinnung siliciumhaltiger Bestandteile weiter aufgereinigt werden. Dabei kann aus den siliciumhaltigen Bestandteilen des Kopfproduktes Abbauprodukte des Phasentransferkatalysators der Formel III teilweise oder vollständig entfernt werden.

Die Entfernung der Abbauprodukte des Phasentransferkatalysators der Formel III aus dem Kopfprodukt der Trägerdampf-Destillation kann durch die Behandlung mit Ozon und/oder Destillation in beliebiger Reihenfolge durchgeführt werden.

Sofern zur Entfernung von Abbauprodukten des Phasentransferkatalysators der Formel III aus dem Kopfprodukt der Trägerdampf-Destillation eine Destillation durchgeführt wird, so kann als Destillation eine weitere Trägerdampf-Destillation eingesetzt werden.

Eine Destillation zur Aufreinigung des Kopfproduktes kann sowohl als separate Destillation als auch als integraler Bestandteil der Trägerdampf-Destillation ausgeführt sein.

Eine destillative Aufreinigung des Kopfproduktes kann vor oder nach dessen Kondensation durchgeführt werden. Eine destillative Aufreinigung des Kopfproduktes kann nach einer der Kondensation nachgeschalteten Phasentrennung durchgeführt werden.

Das von den Abbauprodukten des Phasentransferkatalysators der Formel III teilweise oder vollständig befreite Kopfprodukt kann sowohl außerhalb des Prozesses als auch in jedem beliebigen Schritt vor der Trägerdampf-Destillation eingesetzt werden.

Für die Ozon-Behandlung kann reines Ozon oder in anderen Gasen, beispielsweise Luft, Sauerstoff oder Stickstoff, vorzugsweise Luft verdünntes Ozon eingesetzt werden.

Die Ozon-Behandlung kann kontinuierlich oder diskontinuierlich, vorzugsweise kontinuierlich, durchgeführt werden.

Das Ozon kann mittels Ozongenerator hergestellt werden.

Das Reaktionsprodukt kann vor der Ozon-Behandlung durch Phasentrennung von der wässrigen Phase separiert werden. Das Reaktionsprodukt kann vor der Ozon-Behandlung durch Filtration von Feststoffen, beispielsweise NaCl, separiert werden.

Das Reaktionsprodukt kann vor der Ozon-Behandlung durch Destillation aufgereinigt werden.

Leichtflüchtige Abbauprodukte der Ozonisierung können destillativ aus dem Produkt entfernt werden.

Zur destillativen Entfernung der leichtflüchtigen Abbauprodukte der Ozonisierung können kontinuierliche und diskontinuierliche Destillationsverfahren eingesetzt werden. Insbesondere können Dünnschichtverdampfer für kontinuierliche Destillationsverfahren verwendet werden.

Durch die Prozessschritte Trägerdampf-Destillation und/oder Ozon-Behandlung können die bei dem PTC-Verfahren entstehenden Abbauprodukte des Phasentransferkatalysators der Formel III, beispielsweise Arsine, Phosphine oder Amine, vorzugsweise Tributylamin, abgetrennt oder abgebaut werden.

Zusätzlich kann eine Kohle-Nachbehandlung durchgeführt werden. Für die Kohle-Nachbehandlung kann Aktivkohle eingesetzt werden. Die Kohle-Nachbehandlung kann nach der Trägerdampf-Destillation und / oder nach der Ozon-Behandlung durchgeführt werden.

Die Kohle-Nachbehandlung kann durch Zugabe von Kohle in das Polysulfansilanen der Formel I und anschließender Filtration oder durch Durchleitung von Polysulfansilanen der Formel I durch eine Kohle enthaltende Festbettschüttung erfolgen.

Weitere Nachbehandlungen zur Entfernung der Abbauprodukte des Phasentransferkatalysators der Formel III, beispielsweise Tributylamin, können mit Iod, Chlorsilanen, Peroxiden oder Methyliodid durchgeführt werden.

Ein weiterer Gegenstand der Erfindung ist die Verwendung einer Trägerdampf-Destillation und / oder Ozon-Behandlung zur Entfernung von Abbauprodukten eines Phasentransferkatalysators.

Die Verwendung einer Trägerdampf-Destillation und / oder Ozon-Behandlung zur Entfernung von Abbauprodukten eines Phasentransferkatalysators, vorzugsweise ein Phasentransferkatalysator der Formel III, kann bei der Herstellung von schwefelhaltigen Organosilanen, vorzugsweise Polysulfansilanen, Thiocyanatosilane, geblockten und ungeblockte Mercaptosilane, eingesetzt werden.

Der Trägerdampf-Destillation und / oder Ozon-Behandlung kann eine Aktivkohle-Behandlung nachgeschaltet werden.

Vorteil des erfindungsgemäßen Verfahrens ist die Entfernung von teilweise giftigen oder gesundheitsschädlichen Abbauprodukten des Phasentransferkatalysators der Formel III im Endprodukt und dadurch verbunden eine verbesserte Lagerstabilität (Farbe und S-Verteilung). Analytische **Gaschromatographie** (GC) von Reaktionsmischungen und Reinsubstanzen wurde mit einem Gaschromatographen des Typs 7820A der Firma Agilent gemäß ASTM D 6843 - 02 durchgeführt:
Analytische Trennungen der Schwefelverbindungen und die Bestimmung der Schwefelkettenlänge wurden an einer analytischen **HPLC**-Anlage Series 1260 Infinity II der Firma Agilent Technologies gemäß ASTM D 6844 - 02 durchgeführt.
Säule: Bakerbond C18 (RP), 5 µm, 4,6 x 250 mm, Fließrate 1,50 ml/min, λ = 254 nm, Säulentemperatur 30°C, mobile Phase: Mischung aus 200 ml Tetrabutylammoniumbromid-Lösung (hergestellt aus 400 mg Tetrabutylammoniumbromid in 1 l VE-Wasser), 450 ml Ethanol und 1350 ml Methanol. Die durchschnittliche Schwefelkettenlänge sowie die Probenbestandteile S2 bis S10 wurden mit einer in ASTM D 6844 beschriebenen Analyse und Auswertung bestimmt.

### Beispiele:

### Vergleichsbeispiel 1: Herstellung von Bis(triethoxysilylpropyl)disulfan

Zur Herstellung von Bis(triethoxysilylpropyl)disulfan mittels Phasentransferkatalyse-Verfahren wurde ein Gemisch aus Natriumcarbonat (189 g, 1.8 mol, 1.2 Äquiv.), Natriumhydrogensulfid (225 g, 1.6 mol, 1.0 Äquiv., 40.0%ige wässrige Lösung) und Wasser (572 g, 32 mol, 21 Äquiv.) auf 72°C erhitzt. Das Reaktionsgemisch wurde zunächst für 10 min bei 72°C gerührt, darauffolgend wurde Schwefel (55 g, 1.7 mol, 1.1 Äquiv.) zur Mischung gegeben und weitere 45 min bei 72°C gerührt. Tetra-n-butylammoniumbromid (20 g, 0.03 mol, 0.02 Äquiv., 50%ige wässrige Lösung) und (3-Chlorpropyl)triethoxysilan (743 g, 3.1 mol, 2.0 Äquiv.) wurden bei 70-80°C nacheinander zur Reaktionsmischung gegeben. Die Suspension wurde 3 Stunden bei 75°C gerührt (GC-Umsatz nach 1 Stunde = 98%). Nach Beendigung der Reaktion wurde Wasser (589 g) zugegeben und die Phasen bei 71°C getrennt. Das Rohprodukt (793 g) wurde als gelbe Flüssigkeit erhalten. Leichtsieder wurden danach mittels Dünnschichtverdampfer bei 140°C und 10 mbar abs. entfernt, sodass das Bis(triethoxysilylpropyl)disulfan als Sumpfprodukt isoliert und anschließend filtriert wurde.

### Vergleichsbeispiel 2: Herstellung von Bis(triethoxysilylpropyl)tetrasulfan

Zur Herstellung von Bis(triethoxysilylpropyl)tetrasulfan mittels Phasentransferkatalyse-Verfahren wurde ein Gemisch aus Natriumhydroxid (81 g, 1.0 mol, 1.0 Äquiv.), Natriumhydrogensulfid (284 g, 2.0 mol, 2.0 Äquiv., 40.0%ige wässrige Lösung) und Wasser (158 g, 8.8 mol, 4.2 Äquiv.) auf 70°C erhitzt. Das Reaktionsgemisch wurde zunächst für 10 min bei 70°C gerührt, darauffolgend wurde Schwefel (184 g, 5.7 mol, 2.8 Äquiv.) zur Mischung gegeben und weitere 15 min bei 72°C gerührt. Tetra-n-butylammoniumbromid (17 g, 0.03 mol, 0.01 Äquiv., 50%ige wässrige Lösung) und (3-Chlorpropyl)triethoxysilan (999 g, 4.2 mol, 2.0 Äquiv.) wurden bei 70-80°C nacheinander zur Reaktionsmischung gegeben. Die Suspension wurde 2 Stunden bei 75°C gerührt (GC-Umsatz nach 2 Stunden = 98%). Nach Beendigung der Reaktion wurde Wasser (249 g) zugegeben und die Phasen bei 71°C getrennt. Das Rohprodukt (1.1 kg) wurde als gelbe Flüssigkeit erhalten. Leichtsieder wurden danach mittels Dünnschichtverdampfer bei 140°C und 10 mbar abs. entfernt, sodass das Bis(triethoxysilylpropyl)tetrasulfan als Sumpfprodukt isoliert und anschließend filtriert wurde.

### Beispiel 1: Trägerdampf-Destillation von Bis(triethoxysilylpropyl)disulfan

Das Bis(triethoxysilylpropyl)disulfan aus Vergleichsbeispiel 1 wurde auf 97°C vorgeheizt und von oben mit 30 ml/min auf eine 160°C beheizte auf 20 mbar abs. evakuierte Kolonne gegeben. Im Gegenstrom wurden vom unteren Teil der Kolonne Wasserdampf und Stickstoff eingespeist, die am oberen Teil der Kolonne über eine Destillationsbrücke abdestilliert wurden. Das Destillat war angereichert von Tributylamin und das Bis(triethoxysilylpropyl)disulfan wurde als aufgereinigtes Sumpfprodukt isoliert.

| | |
|---|---|
| *Angaben zur Kolonne:* | 75 cm Füllhöhe und Innendurchmesser = 25 mm, gefüllt mit Porzellansattelkörper (6 mm Durchmesser) |
| *GC vor Destillation*: | 0,54% Tributylamin (Abbauprodukt des PTC-Katalysators) |
| *GC nach Destillation*: | 0,01% Tributylamin |

### Beispiel 2: Trägerdampf-Destillation von Bis(triethoxysilylpropyl)tetrasulfan

Das Bis(triethoxysilylpropyl)tetrasulfan aus Vergleichsbeispiel 2 wurde auf 97°C vorgeheizt und von oben mit 30 ml/min auf eine 160°C beheizte auf 20 mbar abs. evakuierte Kolonne gegeben. Im Gegenstrom wurden vom unteren Teil der Kolonne Wasserdampf und Stickstoff eingespeist, die am oberen Teil der Kolonne über eine Destillationsbrücke abdestilliert wurden. Das Destillat war angereichert von Tributylamin und das Bis(triethoxysilylpropyl)tetrasulfan wurde als aufgereinigtes Sumpfprodukt isoliert.

| | |
|---|---|
| *Angaben zur Kolonne:* | 75 cm Füllhöhe und Innendurchmesser = 25 mm, gefüllt mit Porzellansattelkörper (6 mm Durchmesser) |
| *GC vor Destillation*: | 0,33% Tributylamin (Abbauprodukt des PTC-Katalysators) |
| *GC nach Destillation*: | <0,01% Tributylamin |

### Beispiel 3: Trägerdampf-Destillation von Bis(triethoxysilylpropyl)disulfan

Mehrere Chargen aus nach Vergleichsbeispiel 1 hergestellten Bis(triethoxysilylpropyl)disulfan wurden auf 120°C vorgeheizt und von oben mit 20 kg/h auf eine 120°C beheizte auf 35 mbar abs. evakuierte Kolonne gegeben. Im Gegenstrom wurden vom unteren Teil der Kolonne Wasserdampf (4 kg/h) und Stickstoff (1 nL/min) eingespeist, die am oberen Teil der Kolonne über eine Destillationsbrücke abdestilliert wurden. Das Destillat war angereichert von Tributylamin und das Bis(triethoxysilylpropyl)disulfan wurde als aufgereinigtes Sumpfprodukt isoliert.

| | |
|---|---|
| *Angaben zur Kolonne:* | DN80-Rektifikationskolonne: Es wurden 4x1 m Kolonnenschüsse aus Glas mit einer Kompensationsheizung eingesetzt, welche mit einer Gewebepackung von der Firma Montz A3-500 gepackt wurden. |
| *GC vor Destillation*: | 0,56% Tributylamin (Abbauprodukt des PTC-Katalysators) |
| *GC nach Destillation*: | <0,01% Tributylamin |

### Beispiel 4: Trägerdampf-Destillation von Bis(triethoxysilylpropyl)tetrasulfan

Mehrere Chargen aus nach Vergleichsbeispiel 2 hergestellten Bis(triethoxysilylpropyl)tetrasulfan wurden auf 140°C vorgeheizt und von oben mit 25 kg/h auf eine 140°C beheizte auf 35 mbar abs. evakuierte Kolonne gegeben. Im Gegenstrom wurden vom unteren Teil der Kolonne Wasserdampf (3 kg/h) und Stickstoff (0,5 nL/min) eingespeist, die am oberen Teil der Kolonne über eine Destillationsbrücke abdestilliert wurden. Das Destillat war angereichert von Tributylamin und das Bis(triethoxysilylpropyl)tetrasulfan wurde als aufgereinigtes Sumpfprodukt isoliert.

| | |
|---|---|
| *Angaben zur Kolonne:* | DN80-Rektifikationskolonne: Es wurden 4x1m Kolonnenschüsse aus Glas mit einer Kompensationsheizung eingesetzt, welche mit einer Gewebepackung von der Firma Montz A3-500 gepackt wurden. |
| *GC vor Destillation*: | 0,38% Tributylamin (Abbauprodukt des PTC-Katalysators) |
| *GC nach Destillation*: | <0,01% Tributylamin |

### Beispiel 5: Ozon-Behandlung von Bis(triethoxysilylpropyl)disulfan

In einem flaschenförmigen 250-mL-Reaktionsapparat wurden 150 g Bis(triethoxysilylpropyl)disulfan aus Vergleichsbeispiel 1 vorgelegt und bei Raumtemperatur gerührt. Mittels eines Schlauches wurde über einen Zeitraum von 2 Stunden ein in einem Ozongenerator hergestelltes Ozon-Luft-Gemisch mit einem Ozonbestandteil von ca. 260 mg Ozon durch das Rohprodukt geleitet. Leichtsiederwurden danach mittels Dünnschichtverdampfer bei 140°C und 13 mbar abs. entfernt, sodass das Bis(triethoxysilylpropyl)disulfan als Sumpfprodukt isoliert wurde.

| | |
|---|---|
| *Leistung des Ozongenerator:* | ca. 130 mg/h in Luft |
| *GC vor Ozon-Behandlung*: | 0,1% Ethanol, 0,16% Tributylamin (Abbauprodukt des PTC-Katalysators) |
| *GC nach Ozon-Behandlung*: | 0,1% Ethanol, <0,01% Tributylamin |
| *GC nach Dünnschichtverdampfer*: | 0,02% Ethanol, <0,01% Tributylamin |

### Beispiel 6: Ozon-Behandlung von Bis(triethoxysilylpropyl)tetrasulfan

In einem flaschenförmigen 250-mL-Reaktionsapparat wurden 150 g Bis(triethoxysilylpropyl)-tetrasulfan aus Vergleichsbeispiel 2 vorgelegt und bei Raumtemperatur gerührt. Mittels eines Schlauches wurde über einen Zeitraum von 1 h ein in einem Ozongenerator hergestelltes Ozon-Luft-Gemisch mit einem Ozonbestandteil von ca. 130 mg Ozon durch das Rohprodukt geleitet.
Leichtsieder wurden danach mittels Dünnschichtverdampfer bei 140°C und 13 mbar abs. entfernt, sodass das Bis(triethoxysilylpropyl)tetrasulfan als Sumpfprodukt isoliert wurde.

| | |
|---|---|
| *Leistung des Ozongenerator:* | ca. 130mg/h in Luft |
| *GC vor Ozon-Behandlung*: | 0,2% Ethanol, 0,15% Tributylamin (Abbauprodukt des PTC-Katalysators) |
| *GC nach Ozon-Behandlung*: | 0,04% Ethanol, <0,01% Tributylamin |
| *GC nach Dünnschichtverdampfer*: | 0,03% Ethanol, <0,01% Tributylamin |

### Beispiel 7: Aktivkohle-Behandlung von Bis(triethoxysilylpropyl)disulfan

Bis(triethoxysilylpropyl)disulfan wurde mittels erfindungsgemäßen Verfahrens mit Trägerdampf-Destillation gemäß Beispiel 1 behandelt. Im Folgeschritt wurde das Bis(triethoxysilylpropyl)disulfan aus Beispiel 1 mit je 1% oder 2% Aktivkohle bei Raumtemperatur versetzt und anschließend filtriert.

| | |
|---|---|
| *GC vor Aktivkohle*: | 0,01% Tributylamin |
| *GC nach 1% Aktivkohle*: | <0,01% Tributylamin |
| *GC nach 2% Aktivkohle*: | <0,01% Tributylamin |

### Beispiel 8: Aktivkohle-Behandlung von Bis(triethoxysilylpropyl)tetrasulfan

Bis(triethoxysilylpropyl)tetrasulfan wurde mittels erfindungsgemäßer Destillation mit Trägerdampf-Destillation gemäß Beispiel 2 behandelt. Im Folgeschritt wurde das Bis(triethoxysilylpropyl)tetrasulfan aus Beispiel 2 mit je 1% oder 2% Aktivkohle bei Raumtemperatur versetzt und anschließend filtriert.

| | |
|---|---|
| *GC vor Aktivkohle*: | 0,01% Tributylamin |
| *GC nach 1% Aktivkohle*: | <0,01% Tributylamin |
| *GC nach 2% Aktivkohle*: | <0,01% Tributylamin |

### Beispiel 9: Stabilitätsprüfungen von Bis(triethoxysilylpropyl)tetrasulfan mit 0,28% Tributylamin:

Das Vergleichsbeispiel 2 wurde einer Langzeitlagerstabilitätstest unterworfen. Das Bis(triethoxysilylpropyl)tetrasulfan wurde in definierten Zeitabständen per HPLC analysiert. S2- und S3-Gehalt sind nach der Herstellung nicht stabil.

| | |
|---|---|
| *HPLC nach ca. 1 Tag:* | S2-Gehalt: 17 Gew.-%, S3-Gehalt: 31 Gew.-%, S4-S10-Gehalt: 52 Gew.-% |
| *HPLC nach ca. 7 Monaten:* | S2-Gehalt: 16 Gew.-%, S3-Gehalt: 32 Gew.-%, S4-S10-Gehalt: 52 Gew.-% |
| *HPLC nach ca. 15 Monaten*: | S2-Gehalt: 15 Gew.-%, S3-Gehalt: 33 Gew.-%, S4-S10-Gehalt: 52 Gew.-% |

### Beispiel 10: Stabilitätsprüfungen von Bis(triethoxysilylpropyl)tetrasulfan mit <0,01% Tributylamin:

Das erfindungsgemäßen Beispiel 2 wurde einer Langzeitlagerstabilitätstest unterworfen. Das Bis(triethoxysilylpropyl)tetrasulfan wurde in definierten Zeitabständen per HPLC analysiert. S2- und S3-Gehalt sind nach der Herstellung stabil.

| | |
|---|---|
| *HPLC nach ca. 1 Tag:* | S2-Gehalt: 18 Gew.-%, S3-Gehalt: 31 Gew.-%, S4-S10-Gehalt: 51 Gew.-% |
| *HPLC nach ca. 1 Monat:* | S2-Gehalt: 18 Gew.-%, S3-Gehalt: 31 Gew.-%, S4-S10-Gehalt: 51 Gew.-% |
| *HPLC nach ca. 6 Monaten*: | S2-Gehalt: 18 Gew.-%, S3-Gehalt: 31 Gew.-%, S4-S10-Gehalt: 51 Gew.-% |

### Beispiel 11: Stabilitätsprüfungen von Bis(triethoxysilylpropyl)tetrasulfan mit <0,01% Tributylamin:

Das erfindungsgemäßen Beispiel 5 wurde einer Langzeitlagerstabilitätstest unterworfen. Das Bis(triethoxysilylpropyl)tetrasulfan wurde in definierten Zeitabständen per HPLC analysiert. S2- und S3-Gehalt sind nach der Herstellung stabil.

| | |
|---|---|
| *HPLC nach ca. 1 Tag:* | S2-Gehalt: 17 Gew.-%, S3-Gehalt: 31 Gew.-%, S4-S10-Gehalt: 52 Gew.-% |
| *HPLC nach ca. 5 Monaten:* | S2-Gehalt: 17 Gew.-%, S3-Gehalt: 31 Gew.-%, S4-S10-Gehalt: 52 Gew.-% |
| *HPLC nach ca. 23 Monaten*: | S2-Gehalt: 17 Gew.-%, S3-Gehalt: 31 Gew.-%, S4-S10-Gehalt: 52 Gew.-% |

## Patentansprüche

1. Verfahren zur Herstellung von Polysulfansilanen der Formel I
(R¹)₃₋ₘR²ₘSi-R³-Sₓ-R³-SiR²ₘ(R¹)₃₋ₘ I
wobei R¹ gleich oder verschieden sind und C1-C10-Alkoxygruppe, Phenoxygruppe oder Alkylpolyethergruppe -(R'-O)ᵣR" mit R' gleich oder verschieden sind und eine verzweigte oder unverzweigte, gesättigte oder ungesättigte, aliphatische, aromatische oder gemischt aliphatische/aromatische zweibindige C1-C30 Kohlenwasserstoffgruppe sind, r eine ganze Zahl von 1 bis 30 und R" unsubstituierte oder substituierte, verzweigte oder unverzweigte einbindige Alkyl-, Alkenyl-, Aryl- oder Aralkylgruppe sind,
R² gleich oder verschieden sind und C6-C20-Arylgruppen, C1-C10-Alkylgruppem, C2-C20-Alkenylgruppe, C7-C20-Aralkylgruppe oder Halogen sind,
R³ gleich oder verschieden sind und eine verzweigte oder unverzweigte, gesättigte oder ungesättigte, aliphatische, aromatische oder gemischt aliphatische/aromatische zweibindige C1-C30-Kohlenwasserstoffgruppe sind,
und m gleich oder verschieden sind und 0, 1, 2 oder 3 sind, x ist 2-10,
durch Umsetzung mindestens eines Silans der Formel II
(R¹)₃₋ₘR²ₘSi-R³-Hal II
wobei Hal gleich Cl, Br oder I ist,
mit M(SH)_{y} und/oder M_{z}S und/oder M_{g}Sₕ und/oder Schwefel,
wobei y = 1 oder 2 ist und für y=1 M = Na oder K ist und für y=2 M = Ca oder Mg ist, und z = 1 oder 2 ist und für z=1 M = Ca oder Mg ist und für z=2 M = Na oder K ist, und g = 1 oder 2 ist und für g=1 M = Ca oder Mg ist und für g=2 M = Na oder K ist h= natürlich Zahl zwischen 1 und 10,
in Gegenwart einer Base, einer wässrigen Phase und eines Phasentransferkatalysators der Formel III 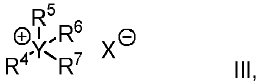
wobei Y ein Element der 5.Hauptgruppe ist,
R⁴, R⁵, R⁶ und R⁷ identisch oder unterschiedlich sind und -(CH₂)ₖCH₃ Alkylreste, mit k=0-9, oder ein oder zwei Ringschlüsse -(CH₂)ₙ- , mit n=2-5, vorzugsweise n=4, zwischen zwei Substituenten ausgewählt aus den Gruppen R⁴, R⁵, R⁶ und R⁷ vorliegen und X⁻ gleich F⁻, I⁻, Cl⁻, Br, ClO4⁻, PF6⁻, BF4⁻, (C₆H₅)₄B⁻, H₂PO₄⁻, CH₃SO₃⁻ , C₆H₅SO₃⁻, HSO₄⁻, NO₃⁻ oder ½ SO₄²⁻ ist,
**dadurch gekennzeichnet, dass** man mindestens eine Trägerdampf-Destillation und / oder Ozon-Behandlung während oder nach der Umsetzung durchführt.

2. Verfahren zur Herstellung von Polysulfansilanen der Formel I gemäß Anspruch 1, **dadurch gekennzeichnet, dass** R¹ Ethoxy, m=0 und R³ = (CH₂)₃ ist.

3. Verfahren zur Herstellung von Polysulfansilanen der Formel I gemäß den Ansprüchen 1 oder 2, **dadurch gekennzeichnet, dass** Hal = Cl ist.

4. Verfahren zur Herstellung von Polysulfansilanen der Formel I gemäß den Ansprüchen 1 bis 3, **dadurch gekennzeichnet, dass** M = Na ist.

5. Verfahren zur Herstellung von Polysulfansilanen der Formel I gemäß Anspruch 1, **dadurch gekennzeichnet, dass** man als Base M_{3-w}CO₃, M(OH)_{w}, M_{3-w}(HPO₄), M(H₂PO₄)_{w} M₃(PO₄)_{w}, wobei w 1 oder 2 ist und für w=1 M = Na oder K und für w=2 M = Ca oder Mg ist, einsetzt.

6. Verfahren zur Herstellung von Polysulfansilanen der Formel I gemäß Anspruch 5, **dadurch gekennzeichnet, dass** man als Base Na₂CO₃ oder NaOH einsetzt.

7. Verfahren zur Herstellung von Polysulfansilanen der Formel I gemäß Anspruch 1, **dadurch gekennzeichnet, dass** man die Umsetzung bei Temperaturen von 25°C bis 200°C durchführt.

8. Verfahren zur Herstellung von Polysulfansilanen der Formel I gemäß Anspruch 1, **dadurch gekennzeichnet, dass** man den Phasentransferkatalysators der Formel III und das Silan der Formel II zu der wässrigen Phase zugibt.

9. Verfahren zur Herstellung von Polysulfansilanen der Formel I gemäß Anspruch 1, **dadurch gekennzeichnet, dass** man zusätzlich eine Kohle-Nachbehandlung durchführt.

10. Verfahren zur Herstellung von Polysulfansilanen der Formel I gemäß Anspruch 1, **dadurch gekennzeichnet, dass** M(SH)_{y} und/oder M_{z}S und/oder M_{g}Sₕ aus MOH und Schwefel in-situ hergestellt werden.

11. Verwendung einer Trägerdampf-Destillation und / oder Ozon-Behandlung zur Entfernung von Abbauprodukten eines Phasentransferkatalysators.
